# EUROPÄISCHE PATENTSCHRIFT

(11) **EP 2 410 348 B1**
(45) Veröffentlichungstag und Bekanntmachung des Hinweises auf die Patenterteilung: **28.09.2016**
(21) Anmeldenummer: 11174900.8
(22) Anmeldetag: 21.07.2011
(51) Int. Cl.: G01S 5/16, G01S 1/70

(54) **System und Verfahren zum Ermitteln einer Position eines beweglichen Objekts, Anordnung von Allgemeinbeleuchtungs-LED und Lichtsensor für eine Positionsermittlung eines beweglichen Objekts**
System and method for determining a position of a mobile object, assembly of general lighting LED and light sensor for determining the position of a mobile object
Système et procédé de détermination de la position d'un objet mobile, agencement de LED d'éclairage général et capteur de lumière pour la détermination de la position d'un objet mobile

(30) Priorität: 21.07.2010 DE 102010031629
(43) Veröffentlichungstag der Anmeldung: 25.01.2012
(73) Patentinhaber: Fraunhofer-Gesellschaft zur Förderung der angewandten Forschung e.V., 80686 München (DE)
(72) Erfinder: Giesekus, Joachim, 14197 Berlin (DE)
(74) Vertreter: Schenk, Markus

(56) Entgegenhaltungen:
- EP-A1- 1 437 636
- EP-A1- 2 391 905
- DE-A1-102007 043 255
- US-A1- 2002 071 161
- US-A1- 2003 125 868
- US-A1- 2006 071 790
- US-A1- 2009 171 571
- US-A1- 2009 251 313
- US-A1- 2010 208 236

## Beschreibung

Ausführungsbeispiele der vorliegenden Erfindung beziehen sich auf Systeme und Verfahren und deren Komponenten zur Positionsermittlung eines beweglichen Objekts, und insbesondere auf eine Positionsermittlung mittels lichtemittierender Dioden (LED) und entsprechenden Lichtsensoren.

Lichtemittierende Dioden (LED - Light Emitting Diodes) finden eine immer weitere Verbreitung. Zunehmend ersetzen die LED auch herkömmliche Leuchtmittel, wie beispielsweise thermische Strahler (Glühbirnen, etc.) und andere Leuchtmittel, die das Licht beispielsweise durch Anregung von Gasen erzeugen. LED ermöglichen eine schnelle Datenübertragung durch Modulation des Anregungsstroms der LED. Damit unterscheiden sich die LED, auch im Hinblick auf ihre Einsatzfähigkeit und Einsatzgebiete, grundsätzlich von den vorgenannten herkömmlichen Leuchtmitteln.

Eine Technologie, die in dem sichtbaren Lichtbereich arbeitet, ist die sog. "Visual Light Communication" (VLC) oder "Sichtbares-Licht-Kommunikation", die für eine optische Datenübertragung Licht im sichtbaren Wellenlängenbereich (ca. 400nm bis 800nm) verwendet. Die VLC-Technologie kann des Weiteren auch für Ortungszwecke eingesetzt werden. So beschreibt US 2009/0171571 A1 ein VLC-basiertes Navigationssystem, bei dem vier VLC-Sender zum einen mit jeweils einem entsprechenden Lampenmodul in Form einer LED gekoppelt sind und zum anderen mit einem Navigationsserver. Für die Ortbestimmung senden die Lampenmodule sogenannte Pilotsignale, die das mobile Gerät empfängt. Die Bestimmung der Position des mobilen Gerätes erfolgt dann über Triangulation, entweder durch den Navigationsserver oder durch das mobile Endgerät selbst. Für die Übertragung der Pilotsignale verwendet das VLC-basierte Navigationssystem vier Lampenmodule mit RGB-LED (RGB- Red-Green-Blue-Rot-Grün-Blau), die jeweils mindestens drei verschiedenfarbige Leuchtdioden mit den Farben Rot, Grün und Blau aufweisen und deren Licht so kombinieren, dass insgesamt ein weißes Licht erzeugt wird. Dabei erzeugen die verschiedenen Lampenmodule das weiße Licht jeweils durch eine unterschiedliche Kombination roter, grüner und blauer Lichtwellenlängen und die Pilotsignale der verschiedenen RGB-LED werden entsprechend in unterschiedlichen Wellenlängen gesendet. Das mobile Gerät weist vier Fotodetektoren auf, die mittels unterschiedlicher Filter jeweils einen dieser unterschiedlichen Wellenlängenbereiche empfangen und auswerten. Die US 2006/071790 A1 beschreibt Verfahren und Vorrichtungen, um ein Endgerät innerhalb eines Arbeitsbereichs mittels RFID-Tags zu lokalisieren.

Die DE 10 2007 043 255 A1 beschreibt eine Datenübertragung mittels Leuchtdioden, die in Gruppen eingeteilt sind, wobei die Gruppen verschiedenartig moduliert werden.

Die nachveröffentlichte EP 2 391 905 A1 beschreibt ein Verfahren und eine Vorrichtung zur Entfernungsbestimmung von Signalübertragungsvorrichtungen unter Verwendung eines einzigen Pulses, der von der emittierenden Vorrichtung ausgegeben wird.

Die US 2009/0251313 A1 beschreibt ein drahtloses Positionsbestimmungssystem, das Tags an Objekten nutzt, um Signale mit verschiedenen Leistungspegeln zu übertragen, die an verschiedenen Sensoren empfangen werden. Die verschiedenen Leistungspegel werden verwendet, um den Ort eines Objekts zu bestimmen.

Aufgabe der vorliegenden Erfindung ist es, eine einfachere und kostengünstigere Möglichkeit der Ortung von beweglichen Objekten durch LEDs bereitzustellen.

Diese Aufgabe wird durch eine Anordnung von mindestens drei Allgemeinbeleuchtungs-LED gemäß Anspruch 1, und ein Verfahren gemäß Anspruch 7 gelöst.

Ausführungsbeispiele der vorliegenden Erfindung schaffen beispielsweise ein System zum Ermitteln einer Position eines beweglichen Objekts mit einer Anordnung mit zumindest drei Allgemeinbeleuchtungs-LED, wobei eine erste Allgemeinbeleuchtungs-LED der zumindest drei Allgemeinbeleuchtungs-LED ausgebildet ist, um ein erstes Lichtsignal zu senden, das eine erste Sendezeitinformation und eine erste Senderinformation in einem ersten Wellenlängenbereich aufweist, wobei die erste Senderinformation zumindest eine Bestimmung einer Position der ersten Allgemeinbeleuchtungs-LED ermöglicht und die erste Sendezeitinformation eine Information über einen Zeitpunkt, an dem das erste Signal gesendet wurde, ist, wobei eine zweite Allgemeinbeleuchtungs-LED der zumindest drei Allgemeinbeleuchtungs-LED ausgebildet ist, um ein zweites Lichtsignal zu senden, dass eine zweite Sendezeitinformation und eine zweite Senderinformation in einem zweiten Wellenlängenbereich aufweist, wobei die zweite Senderinformation zumindest eine Bestimmung einer Position der zweiten Allgemeinbeleuchtungs-LED ermöglicht und die zweite Sendezeitinformation eine Information über einen Zeitpunkt ist, an dem das zweite Signal gesendet wurde, wobei eine dritte Allgemeinbeleuchtungs-LED der zumindest drei Allgemeinbeleuchtungs-LED ausgebildet ist, um ein drittes Lichtsignal zu senden, das eine dritte Sendezeitinformation und eine dritte Senderinformation in einem dritten Wellenlängenbereich aufweist, wobei die dritte Senderinformation zumindest eine Bestimmung einer Position der dritten Allgemeinbeleuchtungs-LED ermöglicht, und die dritte Sendezeitin-formation eine Information über einen Zeitpunkt ist, in dem das dritte Signal gesendet wurde, und wobei der erste Wellenlängenbereich, der zweite Wellenlängenbereich und der dritte Wellenlängenbereich sich in einem Überlappungsbereich zumindest teilweise überlappen. Das System weist ferner einen Lichtsensor auf, der an dem beweglichen Objekt befestigt ist, und ausgebildet ist, das erste bis dritte Lichtsignal in dem Überlappungsbereich zu empfangen und dem ersten Lichtsignal eine erste Signalempfangszeit zuzuordnen, dem zweiten Lichtsignal eine zweite Signalempfangszeit und dem dritten Lichtsignal eine dritte Signalempfangszeit zuzuordnen. Außerdem weist ein Ausführungsbeispiel des Systems eine Auswerteeinheit auf, die ausgebildet ist, um basierend auf der ersten bis dritten Senderinformation, der ersten bis dritten Sendezeitinformation und der ersten bis dritten Empfangszeitinformation die Position des Objektes zu ermitteln.

Weitere Ausführungsbeispiele umfassen Teile des Systems, z.B. die Anordnung der zumindest drei Allgemeinbeleuchtungs-LED, den Lichtsensor und/oder die Auswerteeinheit.

Dabei umfasst der Begriff "Allgemeinbeleuchtungs-LED" alle LED, die für den Zweck der allgemeinen Beleuchtung einer Umgebung im sichtbaren Wellenlängenbereich des Lichtspektrums konzipiert sind und eingesetzt werden, damit sich beispielsweise Menschen oder andere Lebewesen dort besser orientieren und bewegen können. Zur Umgebung zählen dabei sowohl offene wie geschlossene Räumlichkeiten und Plätze, also z.B. Gebäude und darin befindliche Räume und Gänge oder auch freie Plätze. Davon zu unterscheiden sind LED für eine technische Beleuchtung, die also für eine spezifische technische Beleuchtungsfunktion (also eine Funktion, die nicht der allgemeinen Beleuchtung dient) konzipiert sind und eingesetzt werden, z.B. LED für die Beleuchtung von Mikroskopen und den damit zu untersuchenden Proben, oder Laser für eine Abstands- oder Positionsbestimmung.

Allgemeinbeleuchtungs-LED können also beispielsweise Fluoreszenz-LED oder RGB-LED sein, die ausgebildet sind, um für allgemeine Beleuchtungszwecke ein sichtbares Licht erzeugen. Fluoreszenz-LED erzeugen das gewünschte Licht im sichtbaren Wellenlängenbereich durch eine Kombination von LED und geeigneten Fluoreszenzschichten, die durch die LED bestrahlt werden. RGB-LED erzeugen das gewünschte Licht im sichtbaren Wellenlängenbereich durch eine geeignete Kombination verschiedenfarbiger LED. Allgemeinbeleuchtungs-LED (Fluoreszenz-LED und RGB-LED), die ausgebildet sind, um weißes Licht zu erzeugen, werden auch als Weißlicht-LED bezeichnet. Ausführungsbeispiele der Allgemeinbeleuchtungs-LED sind jedoch nicht auf die Erzeugung weißen Lichts (warm oder kalt) eingeschränkt, sondern können auch beliebige andere Farbtöne erzeugen, um beispielsweise ein sogenanntes "Stimmungslicht" zu erzeugen, z.B. pastelltonfarbenes Licht (z.B. pinkfarbenes oder aquamarinblaues Licht).

Ausführungsbeispiele der Erfindung verwenden beispielsweise Fluoreszenz-LED als Allgemeinbeleuchtungs-LED, beispielsweise weiße Standard-LED, die das weiße Licht mittels einer Kombination oder Mischung aus einem direkt erzeugten Lichtanteil und einem über eine Fluoreszenzschicht indirekt erzeugten Lichtanteil erzeugen. Ein Beispiel für derartige Fluoreszenz-LED sind weiße Standard-LED, die eine blaue LED aufweisen, um einen direkten blauen Lichtanteil zu erzeugen und gleichzeitig mit dem blauen Licht eine Fluoreszenzschicht anregen, um weitere, langwelligere Lichtanteile zu erzeugen, um so durch Mischung der direkt und indirekt erzeugten Anteile ein weißes Lichtspektrum zu erzeugen. Durch die Verwendung anderer Fluoreszenzmaterialien können auch andere Lichttöne als weiße Lichttöne erzeugt werden, z.B. pastelltonfarbenes Licht.

Fluoreszenz-LED sind deutlich preiswerter als RGB-LED. Zum anderen sind Fluoreszenz-LED wesentlich verbreiteter, sowohl für allgemeine Beleuchtungszwecke als auch bezüglich ihrer Verwendung in Consumer- oder Verbraucherprodukten. Darüber ermöglichen Ausführungsbeispiele der Erfindung durch die Verwendung der Fluoreszenz-LED und eines für alle LED und Lichtsensoren gemeinsamen Lichtwellenlängenbereichs für die Signalübermittlung nicht nur Einsparungen aufgrund der geringeren Kosten der einzelnen Fluoreszenz-LED gegenüber den einzelnen RGB-LED, sondern auch dadurch, dass nur ein einzelner Lichtsensor benötigt wird, da im Gegensatz dazu die zuvor beschriebenen Ortungssysteme mit vier verschiedenen Lichtwellenlängen auch vier verschiedene Lichtsensoren benötigen. Ausführungsbeispiele der Erfindung verwenden daher Fluoreszenz-LED, die beispielsweise baugleich sind und/oder allgemein Licht in demselben Wellenlängenbereich oder zumindest Licht mit im Wesentlichen überlappenden Wellenlängenbereichen erzeugen.

Weitere Ausführungsbeispiele beschränken das Spektrum an dem Detektor oder Lichtsensor auf den direkt erzeugten Lichtanteil, beispielsweise die blaue Anregungswellenlänge in einem Bereich von 420nm bis 490nm, um eine genauere Ortung zu ermöglichen. Derartige Ausführungsbeispiele basieren auf der Erkenntnis, dass die Absorption der direkten Strahlung und Neuemission der indirekten Strahlung oder des indirekten Lichtanteils gegenüber dem direkt erzeugten Lichtanteil Verzögerungen in einigen Nanosekundenbereichen verursacht, und somit die Signalflanken des modulierten LED-Lichts zeitlich unscharf werden, also verwaschen. Durch die Auswertung allein der direkt erzeugten Lichtanteile, beispielsweise der blauen Lichtanteile, ist eine Erzeugung und Detektion zeitlich schärfer definierter Signalkanten möglich und somit auch, wie zuvor erwähnt, eine zeitlich genauere Bestimmung der Signalflanken, oder allgemein eine zeitlich genauere Auflösung der Signale und Signalverläufe möglich, und damit wiederum eine genauere Positionsbestimmung möglich. Darüber hinaus ermöglicht dies auch eine höhere Datenübertragungsrate.

Entsprechend senden, beispielsweise, alle Fluoreszenz-LED des Positionsbestimmungssystems in demselben blauen Wellenlängenbereich, oder allgemein, in demselben durch die Bauart der Fluoreszenz-LED vorgegebenen Wellenlängenbereich des direkt erzeugten Lichtanteils, und der Lichtsensor wertet im Wesentlichen nur diesen Wellenlängenbereich bzw. Lichtanteil aus, beispielsweise indem das weiße Licht durch einen entsprechenden Filter, z. B. einen Blaufilter, der im Wesentlichen nur für blaue Lichtanteile durchlässig ist, gefiltert wird.

Weitere Ausfuhrungsbeispiele der Erfindung verwenden beispielsweise RGB-LED als Allgemeinbeleuchtungs-LED, die jeweils verschiedene LED-Elemente aufweisen, die jeweils ein Licht oder einen Lichtanteil eines unterschiedlichen Wellenlängenbereichs, d.h. einer unterschiedlichen Farbe, in dem sichtbaren Lichtspektrum erzeugen, wobei die LED-Elemente und deren spezifische Farblichtanteile so gewählt sind, dass eine Kombination oder Mischung dieser Lichtanteile das gewünschte Licht oder den gewünschten Lichtton ergibt, z.B. weißes Licht. Die LED-Elemente der RGB-LED erzeugen den jeweiligen Farblichtanteil direkt, d.h. ohne Fluoreszenzschicht. Bei RGB-LED wird das Weißlicht aus einer Kombination eines roten, eines grünen und eines blauen direkt erzeugten Lichtanteils gemischt. Andere Lichttöne oder andersfarbiges Licht, z.B. das vorgenannte pastelltonfarbene Licht, können beispielsweise durch eine Mischung direkt erzeugter roter, grüner und blauer Lichtanteile anderer Wellenlängen erzeugt werden. Bei Ausführungsbeispielen der Erfindung, bei denen RGB-LED verwendet werden, wird beispielsweise der Anregungsstrom nur eines der LED-Elemente moduliert, um das Signal für die Ortung zu erzeugen. Bei einer Anordnung von Allgemeinbeleuchtungs-LED mit RGB-LED senden alle drei (oder mehr, falls mehr als drei Allgemeinbeleuchtungs- oder RGB-LED für die Positionsbestimmung verwendet werden) beispielsweise das Signal für die Positionsbestimmung in demselben oder zumindest einem überlappenden Wellenlängenbereich, beispielsweise in dem grünen, roten oder blauen Wellenlängenbereich. Vorzugsweise senden alle RGB-LED das Positionssignal nur in dem blauen Wellenlängenbereich (420 nm bis 490 nm), da diese aufgrund ihrer höheren Frequenz eine genauere zeitliche Auflösung und damit eine genauere Ortung ermöglichen.

Ausführungsbeispiele der vorliegenden Erfindung mit RGB-LED als Allgemeinbeleuchtungs-LED können daher RGB-LED verwenden, die beispielsweise baugleich sind und/oder in demselben Wellenlängenbereich oder zumindest Licht mit im Wesentlichen überlappenden Wellenlängenbereichen erzeugen. Somit können die Kosten, die durch die Verwendung unterschiedlicher RGB-LED, wie beispielsweise in dem vorgenannten Stand der Technik beschrieben, vermieden werden, sowohl bei der Produktion als auch bei der Lagerung und Wartung. Zum anderen benötigt das System oder der Empfänger zudem keinen Sensor, der das Licht in vier verschiedenen Wellenlängenbereichen durch entsprechende unterschiedliche Filter filtert und auswertet, sondern, da sich die für die Signalübertragung zur Positionsbestimmung verwendeten Wellenlängenbereiche der zumindest drei RGB-LED in einem Überlappungswellenlängenbereich überlappen, nur einen Lichtsensor, der das Licht in dem Überlappungsbereich empfängt, und beispielsweise andere Wellenlängenbereiche im sichtbaren und/oder nicht sichtbaren Wellenlängenbereich herausfiltert, so dass nur die Signale in dem Überlappungsbereich ausgewertet werden.

Weitere Ausführungsbeispielen können beispielsweise auch eine Kombination aus einer oder mehreren RGB-LED und einer oder mehreren Fluoreszenz-LED verwenden, wobei die RGB-LED und die Fluoreszenz-LED so ausgebildet sind, dass sie die Signale für die Positionsbestimmung in einem sich überlappenden Wellenlängenbereich senden, beispielsweise die RGB-LED mittels ihrer blauen LED-Elemente in einem blauen Wellenlängenbereich und die Fluoreszenz-LED ebenfalls in ihrem direkt erzeugten blauen Wellenlängenbereich.

Für die Positionsbestimmung werden beispielsweise Laufzeitverfahren (TOA-Time of Arrival - Ankunftszeitverfahren) oder Laufzeitdifferenzverfahren (TDOA - Time Differenz of Arrival - Ankunftszeitdifferenzverfahren) eingesetzt.

Weitere Ausführungsbeispiele der vorliegenden Erfindung verwenden Multiplexverfahren, wie beispielsweise Zeitmultiplex oder Codemultiplexverfahren, um die Lichtsignale der verschiedenen Fluoreszenz-LED, die in demselben Wellenlängenbereich gesendet werden, zu unterscheiden.

Andere Ausführungsbeispiele, die die Überlagerung der Signale an dem Empfänger nutzen (z.B. konstruktive Interferenz), verzögern wiederum die Sendezeitpunkte der einzelnen Signale derart, dass diese trotz der unterschiedlichen Weglängen gleichzeitig oder zumindest im Wesentlichen gleichzeitig bei dem Lichtsensor ankommen oder von diesem empfangen werden, und bestimmen mittels der dafür notwendigen Sendezeitdifferenzen die Position des beweglichen Objekts.

Des Weiteren ermöglichen Ausführungsbeispiele der vorliegenden Erfindung eine einfache Erweiterung um zusätzliche Fluoreszenz-LED und somit eine Erhöhung der Ortsauflösung oder Genauigkeit der Positionsbestimmung. Dies gilt sowohl für die Ausführungsbeispiele, die auf einer konstruktiven Interferenz basieren, als auch die Ausführungsbeispiele, die ein Zeitmultiplexverfahren verwenden.

In herkömmlichen Systemen sind die Funktionalitäten Beleuchtung, Datenübertragung und Ortung zumeist in getrennten Systemen realisiert. Die Beleuchtung beispielsweise durch herkömmliche Leuchtmittel, aber auch LED, die Ortung und Datenkommunikation, beispielsweise über Funktechnologien, teilweise sogar unterschiedlichen Funktechnologien für die Ortung und die Kommunikation. Der Ortung kommt dabei eine immer größere Bedeutung zu, da beispielsweise in der Logistik Wege nicht mehr a priori definiert sind, sondern flexibel optimiert werden. Produkte werden in herkömmlichen Systemen beispielsweise mit Barcodes ausgestaltet und gescannt, sobald sie einen Ort erreichen. Eine permanente Ortung wird beispielsweise auf der Basis von Funktechnik realisiert, beispielsweise mittels RFID (Radio Frequency IDentification - Radiofrequenzidentifikation). Diese Ansätze ermöglichen jedoch nur eine punktuelle Erfassung des Warenstroms und können diese nicht permanent und echtzeitfahig überwachen.

Ausführungsbeispiele der vorliegenden Erfindung ermöglichen die Integration dieser drei Funktionalitäten Beleuchtung, Datenübertragung und Ortung in einem System. Im Gegensatz zu dem vorab beschriebenen RGB-LED-basierten Ortungssystem, ermöglichen Ausführungsbeispiele der vorliegenden Erfindung (mit Fluoreszenz-LED und/oder RGB-LED) eine Integration dieser drei Funktionalitäten mit nur einem Sender- und Empfängerpaar.

Im Vergleich zu herkömmlichen Systemen, bei denen die drei zuvor genannten Funktionalitäten in getrennten Systemen realisiert werden, benötigen Ausführungsbeispiele der vorliegenden Erfindung beispielsweise keine zusätzlichen Hardware-Komponenten im Vergleich zu rein optischen Datenübertragungssystemen. Daraus ergeben sich deutliche Kostenvorteile und einfache Möglichkeiten der technischen Realisierung von Ortungs- und Sicherheitsmerkmalen, um die Baugröße von Geräten zu beeinträchtigen.

Die Kombination der Datenübertragung mit Licht und der Positionsbestimmung mit Licht ermöglichen darüber hinaus neue Sicherheitsfunktionen, weil derartige Lösungen es ermöglichen, Datenströme aufgrund der für die Kommunikation notwendigen Sichtverbindung zwischen LED und Lichtsensor gezielt an frei definierten Orten verfügbar zu machen und nicht zugelassene Orte von Datenströmen abzuschneiden. Damit kann die Abhörsicherheit der Kommunikation maßgeblich gesteigert werden, weil der Ort des Empfängers aus den optischen Signalen mit hoher Genauigkeit ermittelt werden kann. In andere Worten, ermöglichen Ausführungsbeispiele der vorliegenden Erfindung eine deutlich erhöhte Sicherheit bei der Kommunikation, da die Übertragungsprotokolle Daten gezielt an definierten Orten zur Verfügung stellen können.

In weiteren Anwendungsbeispielen kann beispielsweise in einem Flugzeug die Beleuchtung genutzt werden, um die Unterhaltungssysteme in den Sitzen anzusprechen. Gleichzeitig kann der Sitz identifiziert werden und auch erfasst werden, ob die Sitze zu Start und Landung in einer aufrechte Position gebracht wurden.

Bei ortsfesten und mobilen Geräten kann ein Diebstahlschutz realisiert werden, wobei die Benutzung nur in einem definierten Raum ermöglicht wird. Ein universelles Messgerät, das in der Fertigung benötigt wird, bleibt sicher an seinem vorgesehenen Einsatzplatz, weil es für andere Orte unbrauchbar wird.

Erfindungsgemäße Verfahren und Systeme lassen sich also auch im industriellen Umfeld in der Fertigung oder bei der Logistik einsetzen. In Museen können Audiosysteme frei geplante Rundgänge erlauben und interaktiv gestaltet werden. In der Sicherheitstechnik können abhörsichere Datenverbindungen aufgebaut werden, die auch innerhalb der Reichweite der optischen Strahlen begrenzt werden können. Damit können beispielsweise Lösungen im Bereich der Verteidigung aufgebaut werden.

Ausführungsbeispiele der vorliegenden Erfindung werden nachfolgend unter Bezugnahme auf die beiliegenden Zeichnungen näher erläutert. Es zeigen:
- Fig. 1: eine schematische Darstellung eines Systems zum Ermitteln einer Position eines beweglichen Objekts mittels zumindest drei Fluoreszenz-LED und einem an dem beweglichen Objekt befestigten Lichtsensor.
- Fig. 2: zeigt ein schematisches Spektrum einer Fluoreszenz-LED und eine schematische Darstellung des Funktionsprinzips der Fluoreszenz-LED.
- Fig. 3: zeigt eine schematische Darstellung eines Zeitmultiplexverfahrens für die Signalübertragung von drei Fluoreszenz-LED zu dem Lichtsensor.
- Fig. 4: zeigt schematische Darstellungen der zeitversetzt gesendeten Signale der Fluoreszenz-LED zur Positionsbestimmung mittels konstruktiver Interferenz.
- Fig. 5: zeigt eine schematische Darstellung eines Ausführungsbeispiels zum bestimmen einer Position eines beweglichen Objekts mit einer an dem Objekt befestigten Fluoreszenz-LED und drei Lichtsensoren.

In der nachfolgenden Beschreibung der Ausführungsbeispiele werden für gleiche oder gleich wirkende Elemente gleiche Bezugszeichen verwendet.

Im Folgenden werden Ausführungsbeispiele mit Fluoreszenz-LED als Allgemeinbeleuchtungs-LED beschrieben. Die Erläuterungen gelten jedoch entsprechend für andere Ausführungsbeispiele mit beispielsweise RGB-LED als Allgemeinbeleuchtungs-LED.

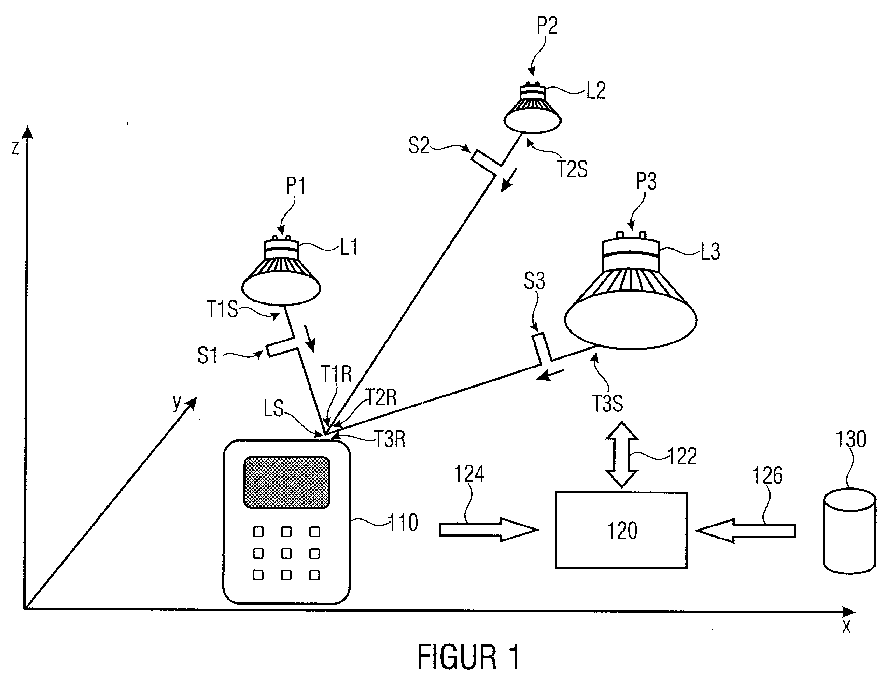

Fig. 1 zeigt eine schematische Darstellung eines Ausführungsbeispiels eines Systems zum Ermitteln einer Position eines beweglichen Objekts 110, wobei das System eine Anordnung von drei Fluoreszenz-LED L1, L2 und L3, einen Lichtsensor LS, der an dem beweglichen Objekt befestigt ist, und eine Auswerteeinheit 120 aufweist. Optional kann das System auch eine Datenbank 130 aufweisen.

Die Fluoreszenz-LED L1 bis L3 sind beispielsweise in der Decke, einer Wand oder anderen Umgebungsobjekten integriert oder an diesen befestigt und haben jeweils eine definierte, bekannte feste Position P1 bis P3. Die Positionen P1 bis P3 sind unterschiedlich, um über beispielsweise Laufzeitverfahren die Position des Objekts 110 bestimmen zu können. Die erste Fluoreszenz-LED L1, die an der ersten Position P1 angeordnet ist, ist ausgebildet, um zu einem ersten Sendezeitpunkt T1S ein erstes Lichtsignal S1 zu senden. Die zweite Fluoreszenz-LED L2, die an der zweiten Position P2 angeordnet ist, ist ausgebildet, um zu einem zweiten Sendezeitpunkt T2S ein zweites Lichtsignal S2 zu erzeugen oder zu senden. Die dritte Fluoreszenz-LED L3, die an der dritten Position P3 angeordnet ist, ist ausgebildet, um zu einem dritten Sendezeitpunkt T3S ein drittes Lichtsignal S3 zu senden. Die Signale S1 bis S3 sind jeweils durch einen Puls (siehe Fig. 1) symbolisch dargestellt, und beschränken sich nicht auf Pulse, sondern können allgemein beliebige, beispielsweise entsprechend modulierte Signale sein.

Die Fluoreszenz-LED L1 bis L3 sind darüber hinaus derart synchronisiert, dass sie eine gemeinsame Zeitbasis haben, z.B. eine gemeinsame absolute Zeitbasis in Form eines Zeitstempels, um beispielsweise ein gleichzeitiges Senden oder definiertes zeitversetztes Senden des ersten bis dritten Signals S1 bis S3 zu ermöglichen, und/oder, wenn die ersten bis dritten Signale S1 bis S3 zu unterschiedlichen Zeitpunkten gesendet werden, basierend auf der bekannten Sendezeit T1S bis T3S eine entsprechende Differenz oder Verzögerung der Sendezeiten bestimmen zu können.

Der Lichtsensor 110 ist ausgebildet, um das erste Lichtsignal S1 zu einem ersten Empfangszeitpunkt T1R zu empfangen, das zweite Lichtsignal S2 zu einem zweiten Empfangszeitpunkt T2R zu empfangen und das dritte Lichtsignal S3 zu einem dritten Empfangszeitpunkt T3R zu empfangen. Der erste bis dritte Signalempfangszeitpunkt kann auch als erste bis dritte Signalempfangszeit T1R bis T3R bezeichnet werden.

Die Auswerteeinheit 120 ist allgemein ausgebildet, um basierend auf den ersten bis dritten Signalen S1 bis S3 und den Positionen P1 bis P3 der Fluoreszenz-LED L1 bis L3 die Position des Objekts 110 zu ermitteln. Die Auswerteinheit 120 kann ausgebildet sein, Daten mit den Fluoreszenz-LED L1 bis L3 auszutauschen (z.B. für eine Steuerung der L1 bis L3 durch die Auswerteinheit und/oder für eine Synchronisation, s. Pfeil 122), Daten von dem Lichtsensor LS zu empfangen (s. Pfeil 124) und/oder Daten von der Datenbank abzurufen (s. Pfeil 126, z.B. um eine einer Kennung oder Senderinformation zugeordnete Position P1 bis P3 einer Fluoreszenz-LED L1 bis L3 auszulesen).

Gemäß einem ersten Ausführungsbeispiel ist die erste Fluoreszenz-LED L1 ferner ausgebildet, das erste Lichtsignal S1 mit einer ersten Sendezeitinformation, z. B. dem ersten Sendezeitpunkt T1S und einer ersten Senderinformation, z. B. der Position P1 der ersten Fluoreszenz-LED oder allgemein eine Information, die zumindest eine Bestimmung der Position P1 der ersten Fluoreszenz-LED ermöglicht, zu senden. Entsprechendes gilt für die zweite Fluoreszenz-LED L2 und die dritte Fluoreszenz-LED L3. In einem derartigen Ausführungsbeispiel kann der Lichtsensor LS ferner ausgebildet sein, dem empfangenen ersten Signal S1 die erste Signalempfangszeit T1R zuzuordnen, beispielsweise in Form eines Datensatzes oder eines Indexes, dem zweiten empfangenen Signal S2 die entsprechende zweite Empfangszeit T2R zuzuordnen, und dem dritten empfangenen Signal S2 die entsprechende dritte Empfangszeit T3R zuzuordnen. Bei derartigen Ausführungsbeispielen kann die Auswerteeinheit 120 dann ferner ausgebildet sein, um basierend auf der ersten bis dritten Senderinformation, der ersten bis dritten Sendezeitinformation T1S bis T3S und der ersten bis dritten Empfangszeitinformation T1R bis T3R, die Position des Objekts 110 zu ermitteln.

Beispielsweise können Ausführungsbeispiele der Auswerteeinheit 320 ausgebildet sein, um basierend auf der ersten Sendezeitinformation T1S und der ersten Empfangszeitinformation T1R ein Maß für die Laufzeit des ersten Signals S1 von der ersten Fluoreszenz-LED L1 zu dem beweglichen Objekt 110, oder genauer gesagt zu dem Lichtsensor LS, zu ermitteln, und beispielsweise die Laufzeit direkt durch Differenzbildung zu ermitteln, wenn der Lichtsensor LS mit den Fluoreszenz-LED L1 bis L3 ebenfalls derart synchronisiert ist, dass dieser mit den Fluoreszenz-LED eine gemeinsame Zeitbasis aufweist. Entsprechend kann die Auswerteeinheit 110 ferner eine Laufzeit oder zumindest ein Laufzeitmaß für das zweite Signal S2 und das dritte Signal S3 ermitteln. Da die Laufzeit proportional zu der optischen Distanz der jeweiligen Fluoreszenz-LED ist, also beispielsweise die Distanz zwischen der ersten Fluoreszenz-LED L1 und dem beweglichen Objekt 110 oder dem Lichtsensor LS proportional zu der Laufzeit des ersten Signals S1 ist, und die Ausbreitungsgeschwindigkeit des Signals bekannt ist, kann die Position des beweglichen Objekts 110, genauer gesagt, stellvertretend dafür die Position des Lichtsensors LS, beispielsweise durch Trilateration oder Multilateration, wenn mehr als drei Fluoreszenz-LED für die Ortsbestimmung verfügbar sind, bestimmt werden. Theoretisch könnte mit drei Fluoreszenz-LED oder drei Laufzeitmessungen die Position des Objektes in dem dreidimensionalen Raum (siehe x,y,z-Koordinatensystem in Fig. 1) eindeutig bestimmt werden. Da jedoch in der Praxis Messungenauigkeiten bei der Laufzeitbestimmung auftreten, kann durch eine Erhöhung der Anzahl der Fluoreszenz-LED und entsprechend eine Erhöhung der Laufzeitmessungen von verschiedenen Positionen, die Genauigkeit der Positionsbestimmung erhöht werden. Derartige Trilaterations- oder Multilaterationsverfahren werden auch als Time-of-Arrival (TOA)-Verfahren bezeichnet.

Ist der Lichtsensor LS nicht mit den drei (oder mehr) Fluoreszenz-LED L1 bis L3 synchronisiert, oder kann nicht mit diesen synchronisiert werden, so können statt der oben genannten Trilateriations- oder Multilaterationsverfahren hyperbel-basierte Ortsbestimmungsverfahren eingesetzt werden. Bei diesen kann aufgrund der fehlenden Synchronisation nicht direkt auf die Laufzeit des jeweiligen Signals, z. B. die Laufzeit des ersten Signals S1 über die Differenzbildung zwischen der Sendezeit T1S und der Empfangszeit T1R, rückgeschlossen werden, sondern nur paarweise mit einem anderen Signal, auf eine Laufzeitdifferenz zwischen der Laufzeit, beispielsweise des ersten Signals S1 und einer Laufzeit des zweiten Signals S2. Die Punkte gleicher Zeitdifferenzen liegen dabei auf Hyperboloiden. Durch die Verwendung von mindestens drei Fluoreszenz-LED L1 bis L3 können entsprechend drei Paare von Fluoreszenz-LED, nämlich L1 und L2, L1 und L3 und L2 und L3, gebildet werden, und Differenzen für die Signallaufzeiten zwischen dem ersten Signal S1 und dem zweiten Signal S2, zwischen dem ersten Signal S1 und dem dritten Signal S3, und zwischen dem zweiten Signal S2 und dem dritten Signal S3 gebildet werden. Da auch die Positionen P1 bis P3 der Fluoreszenz-LED bekannt sind, können basiert auf diesen Positionsfunktionen und den Laufzeitdifferenzen entsprechende drei Hyperboloide definiert werden, deren Schnittpunkt die Position des Lichtsensors LS oder des beweglichen Objekts 110 ist. Derartige Verfahren werden auch als Time-Difference-of-Arrival (TDOA) Verfahren bezeichnet. Auch hier können zur genaueren Positionsbestimmung, mehr als drei Fluoreszenz-LED eingesetzt werden, um mehr Laufzeitdifferenzen bestimmen zu können, und somit aufgrund der Überbestimmung beispielsweise durch Messungenauigkeiten bedingte Mehrdeutigkeiten bei der Positionsbestimmung ausgeschlossen werden, also die Position des Objekts genauer bestimmt werden.

Die Positionen P1 bis P3 der Fluoreszenz-LED können dabei direkt in dem Signal S 1 bis S3 mitgesendet werden, oder beispielsweise in einer Datenbank oder allgemein in einem Speicher, 130 gespeichert sein, und über eine entsprechende Senderkennung, die für jeden Sender bzw. die für jede Fluoreszenz-LED individuell und eindeutig vergeben ist, ermittelt werden. Entsprechend ergeben sich vielfältige Ausführungsformen für die Implementierung der Erfindung, abhängig davon, welche Informationen mit den Signalen S1 bis S3 mitgesendet werden, und/oder wo die Auswertung stattfindet.

Beispielsweise kann die Auswerteeinheit 120 ebenfalls an dem beweglichen Objekt angebracht sein, in dem Lichtsensor integriert sein, oder gemeinsam mit dem Lichtsensor in dem beweglichen Objekt integriert sein. Alternativ kann die Auswerteeinheit 120 auch nicht in dem oder an dem beweglichen Objekt befestigt sein, sondern in der Umgebung, beispielsweise in Nähe der Fluoreszenz-LED, oder an einem anderen beliebigen Ort. Darüber hinaus können Teilaufgaben oder Teilfunktionalitäten der Auswerteeinrichtung auf verschiedene Teileinheiten verteilt sein, wobei manche dieser Teileinheiten an dem Objekt befestigt sein können, und andere wiederum an anderen Orten, unabhängig und entfernt von dem beweglichen Objekt angeordnet sein können.

Für den Fall, dass die Auswerteeinheit 120 an oder in dem beweglichen Objekt angeordnet ist, kann der Lichtsensor LS ausgebildet sein, die erste bis dritte Sendezeitinformation, T1S bis T3S, die erste bis dritte Empfangssendeinformation T1R bis T3R und die erste bis dritte Senderinformation (z.B. Senderkennung, die zumindest eine Zuordnung einer Position für die Positionsbestimmung ermöglicht, oder Position des entsprechenden Fluoreszenz-LED direkt) an die Auswerteeinheit auszugeben (siehe Pfeil 124 in Fig. 1), welche wiederum basierend darauf die Position, beispielsweise mittels Multilaterations-Verfahren oder hyperbel-basierten Verfahren oder anderen geeigneten Verfahren, bestimmt. Die Position kann dann beispielsweise auf einem Display des beweglichen Objekts, beispielsweise einem mobilen Endgerät in Textform oder graphisch dargestellt werden, und/oder über eine weitere Kommunikationsschnittstelle für eine zentrale Weiterverarbeitung der Positionsdaten verwendet werden. So kann beispielsweise der Lichtsensor LS, oder in dem Fall, dass die Auswerteeinheit 120 ebenfalls an dem beweglichen Objekt befestigt ist, eine weitere eindeutige Kennung aufweisen, beispielsweise in einem Speicher des Lichtsensors oder der Auswerteeinheit, und diese Gerätekennung zusammen mit der Position an ein zentrales Erfassungssystem weiterleiten, das für eine Vielzahl von beweglichen Objekten die Position erfasst und ggf. speichert oder wiedergibt.

Für den Fall, dass eines oder mehrere der Lichtsignale S1 bis S3 nur eine Senderinformation in Form einer Gerätekennung oder Fluoreszenz-LED-Kennung aufweisen, kann die Auswerteeinheit beispielsweise ausgebildet sein, die für die Positionsbestimmung des beweglichen Objekts notwendigen Positionen P1bis- P3 der Fluoreszenz-LED über eine Datenbank oder allgemein einen Speicher 130 zu ermitteln, in dem für jede der Fluoreszenz-LED-Kennungen eine Position hinterlegt ist. Diese gespeicherte Zuordnung oder Datenbank kann beispielsweise in der Auswerteeinheit 120 integriert sein oder in einer separaten Einheit an dem beweglichen Objekt befestigt sein oder wiederum über eine weitere, beispielsweise kontaktlose Schnittstelle mit der Auswerteeinheit verbunden sein (siehe Pfeil 126 in Fig. 1).

In alternativen Ausführungsbeispielen kann die Auswerteeinheit 120 auch an einem anderen beliebigen Ort angeordnet sein, oder entsprechend auch die Datenbank 130. In diesem Fall übermittelt der Lichtsensor LS beispielsweise die erste bis dritte Senderinformation, die erste Sendezeitinformation und die erste bis dritte Empfangszeitinformation über eine kontaktlose Schnittstelle, auch als Luftschnittstelle bezeichnet, an die Auswerteeinheit 120, die dann basierend auf diesen Daten die Position des Objekts 110 bestimmt. Alternativ kann der Lichtsensor oder eine entsprechende daran angeschlossene Signalverarbeitungseinheit, die ebenfalls an dem Objekt befestigt ist, die vorgenannten Informationen weiterverarbeiten, z.B. die Laufzeiten oder Laufzeitdifferenzen bestimmen, und diese weiterverarbeiteten Informationen oder nur diese an die Auswerteeinheit senden.

Für diese Kommunikation weist das System beispielsweise einen weiteren Sender auf, der an dem beweglichen Objekt angeordnet oder in diesem integriert ist und ausgebildet ist, an einen entsprechenden Empfänger, der beispielsweise wiederum mit der Auswerteeinheit 120 verbunden ist, über Funktechnologien (z. B. WLAN-Wireless Local Area Network - Schnurloses Lokales Netzwerk), monochromatische optische Übertragungstechnologien (z.B. IrDA-Infrarot Data Association-Datenübertragung im infraroten Lichtbereich) oder ebenfalls, wie für die Positionsbestimmung, im sichtbaren Lichtbereich mittels Fluoreszenz-LED. Die Sende- oder Kommunikationsrichtung von den Fluoreszenz-LED, oder allgemein von der Umgebung, zu dem beweglichen Objekt wird auch als Down-link (Abwärtskommunikationsverbindung) bezeichnet, während die Sende- oder Kommunikationsrichtung von dem beweglichen Objekt zu der Umgebung auch als "Up-link" (Aufwärtskommunikationsverbindung).

In weiteren Ausführungsbeispielen können die Fluoreszenz-LED L1 bis L3 ferner ausgebildet sein, allgemein Daten, also Daten, die nicht mit der Positionsbestimmung zusammenhängen, im Down-link an den Lichtsensor LS und entsprechende nachgeschaltete Datenverarbeitungseinheiten, beispielsweise in einem mobilen Endgerät, zu senden, und im Up-link ebenfalls eine Fluoreszenz-LED und einen entsprechenden Lichtsensor auf der Umgebungsseite zu verwenden, um Daten von dem beweglichen Objekt oder dem mobilen Endgerät zu der Umgebung, beispielsweise einem zentralen Logistik- oder allgemeinen Datenerfassungssystem zu übertragen, oder allgemein um Positionsdaten und/oder andere Daten an andere Geräte, beispielsweise Server oder andere Endgeräte, zu senden. Der dafür nötige Umgebungslichtsensor kann beispielsweise an oder in den Fluoreszenz-LED angeordnet oder integriert sein, oder an anderen Positionen der Umgebung angeordnet und/oder integriert sein.

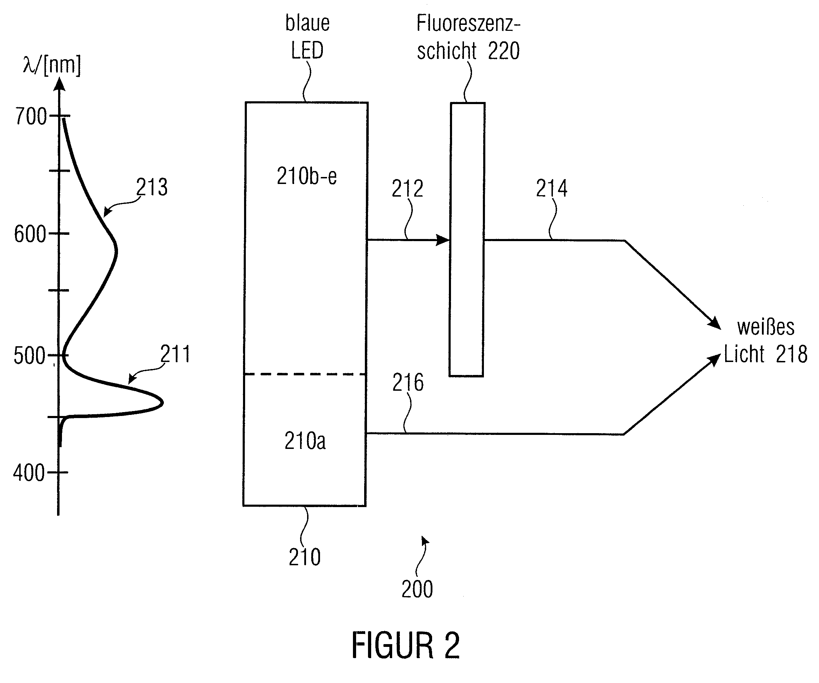

Fig. 2 zeigt eine schematische Darstellung des Wirkprinzips einer Flureszenz-LED (rechte Seite der Fig. 2) und eine spektrale Zusammensetzung des durch die Fluoreszenz-LED erzeugten weißen Lichts (linke Seite der Fig. 2). Die Fluoreszenz-LED 200 (beispielsweise Fluoreszenz-LED L1 bis L3 aus Fig. 1) weist oder ein mehrere blaue LED-Elemente 210 auf, die ein blaues Licht, beispielsweise in einem Wellenlängenbereich von 450 nm bis 500 nm erzeugen (siehe Bezugszeichen 211 in Fig. 2), wobei zumindest ein Teil dieses blauen Lichts (siehe Bezugszeichen 212) wiederum eine Fluoreszenzschicht 220 anregt, um einen langwelligeren Lichtanteil (siehe Wellenlängenbereich und Bezugszeichen 213 links in Fig. 2) zu erzeugen und als indirekten Lichtanteil 214 abzugeben. Dieser indirekte Lichtanteil 214 wird mit dem direkt erzeugtem Lichtanteil 216, der nicht durch die Fluoreszenzschicht 220 absorbiert wird und/oder an dieser Fluoreszenzschicht 220 vorbei geführt wird, kombiniert, um das weiße Licht 218 zu erzeugen. Eine derartige Fluoreszenz-LED 200 in, die auch als weiße Standard-LED bezeichnet kann, kann jedoch nicht nur blaue LEDs, sondern auch oder an Stelle der blauen LED UV-LED (UV = Ultraviolett) verwenden. Dabei wird kurzwelliges, höher energetisches Licht, also das blaue oder ultraviolette Licht, in langwelliges, niedriger-energetisches Licht umgewandelt. Ausführungsbeispiele der Fluoreszenz-LED können verschiedene Leuchtstoffe aufweisen, und beispielsweise auch verschiedene Fluoreszenzmaterialien in der Fluoreszenzschicht, die unterschiedliche indirekte Lichtanteile erzeugen. Beispielsweise können UV-LED mit mehreren verschiedenen Fluoreszenzmaterialien für die Erzeugung eines roten, grünen und/oder blauen Lichtanteils verwendet werden. Typischerweise werden jedoch blaue LED mit nur einem einzigen Leuchtstoff, beispielsweise einem gelblich fluoreszierenden Leuchtstoff wie Cer-dotiertes Yttrium-Aluminium-Granat kombiniert. Eine Kombination mit anderen Fluoreszenzstoffen ermöglicht die Erzeugung andersfarbigen Lichts, z.B. pastelltonfarbenes Licht.

Die Fluoreszenz-LED 220 kann beispielsweise ein einziges LED-Element 210 oder mehrere LED-Elemente aufweisen, wobei ein LED-Element oder eine erste Anzahl von LED-Elementen nicht mit einer Fluoreszenzschicht 220 versehen ist, um einen direkten Lichtanteil 216 zu erzeugen, und zumindest ein anderes LED-Element oder eine zweite Vielzahl von LED-Elementen mit der Fluoreszenzschicht 220 versehen ist, um den indirekten Lichtanteil 214 zu erzeugen. In einem konkreten Ausführungsbeispiel weist die Fluoreszenz-LED 200, beispielsweise fünf blaue LED-Elemente 210a bis 210e auf, wobei ein LED-Element 210a keine Fluoreszenzschicht 220 aufweist, und einen direkten blauen Lichtanteil 216 erzeugt, und vier weitere blaue LED-Elemente 210b bis 210e mit einer Fluoreszenzschicht versehen sind, um den indirekten, nicht-blauen Lichtanteil in dem sichtbaren Wellenlängenbereich zu erzeugen.

Da die durch die blauen LED-Elemente 210b bis 210e erzeugten Photonen hoher Energie und kurzer Wellenlänge (z.B. blaues Licht in einem Wellenlängenbereich von 420 nm bis 490 nm) durch die Fluoreszenzschicht 220, beispielsweise aus Phosphor, absorbiert werden, um dann Photonen höherer Wellenlängen (z.B. oberhalb des blauen Lichtspektrums, also höher als 490 nm) und geringerer Energie durch spontane Emission zu erzeugen, ergeben sich Verzögerungen und eine deutliche Zunahme der Dispersion in der Signalausbreitung bei der Modulation der Fluoreszenz-LED 200, die gegenüber den direkt gesendeten Lichtanteilen oder direkt erzeugten Photonen 216 Verzögerungen in einem Bereich von ein paar Nanosekunden verursachen. Diese Verzögerungen sind aufgrund der hohen Ausbreitungsgeschwindigkeit des Lichts und der im Verhältnis dazu geringen Distanzen zwischen den Fluoreszenz-LED und dem Lichtsensor bzw. dem Objekt 210, störend und führen zu erheblichen Messungenauigkeiten. Durch die Verwendung allein des direkt erzeugten Lichtanteils 216, oder in anderen Worten, durch die alleinige Auswertung der direkt erzeugten Lichtanteile des weißen Lichts 218 ist eine höhere zeitliche Auflösung - bei entsprechender Schnelligkeit der Sender oder Modulatoren und der entsprechenden Detektoren oder Lichtsensoren - möglich und somit, wie zuvor erläutert, eine genauere Positionsbestimmung des Lichtsensors LS oder des beweglichen Objekts 110.

Die Beschränkung auf den direkt gesendeten Lichtanteil 216 kann beispielsweise dadurch erreicht werden, dass vor den Lichtsensor LS ein entsprechender Farbfilter angeordnet wird, beispielsweise für blaues direktes Licht ein blauer Filter, der im Wesentlichen nur blaue Lichtanteile durchlässt und für andere Lichtanteile im Wesentlichen undurchlässig ist (z.B. 5 mal oder 10 mal durchlässiger ist). In diesem Fall ist nicht relevant, ob nur der direkt erzeugte Lichtanteil 216 oder auch die indirekt erzeugten Lichtanteile moduliert werden, beispielsweise durch die Modulation der Anregungsströme aller LED-Elemente 210a bis 210e oder des einen LED-Elements im Falle, dass die Fluoreszenz-LED nur ein LED-Element 210 aufweist, da diese, wie gesagt, durch das entsprechende Filter herausgefiltert werden.

Alternativ oder zusätzlich kann beispielsweise auch nur das entsprechende LED-Element, das den direkten Lichtanteil 216 erzeugt, beispielsweise 210a in Fig. 2, moduliert werden bzw. dessen Anregungsstrom moduliert werden, um eine Beschränkung auf den direkt erzeugten Lichtanteil 216 herbeizuführen. Die erste Variante, die Verwendung eines entsprechenden Filters an dem Lichtsensor, hat den Vorteil, dass alle LED-Elemente gleichartig angesteuert werden können, und somit bestehende Beleuchtungssysteme, die Fluoreszenz-LED einsetzen und/oder Kommunikationssysteme, die Fluoreszenz-LED für eine Datenübertragung im sichtbaren Wellenlängenbereich einsetzen, auf einfache Weise um die zusätzliche Funktionalität der Positionsbestimmung ergänzt werden können, ohne die Bauart und/oder Konstruktion der eigentlichen Fluoreszenz-LED 200 an sich verändern zu müssen. Für eine Erweiterung herkömmlicher "dummer" Beleuchtungs-LED um die Positionsbestimmungsfunktionalität und optional die Datenübertragungsfunktionalität, wird beispielsweise jeder Fluoreszenz-LED eine LED-Steuereinheit zugeordnet. Die LED-Steuereinheit weist beispielsweise einen Speicher auf, in dem eine Gerätekennung fest oder veränderbar gespeichert ist, die eine eindeutige Zuordnung oder Adressierung der Fluoreszenz-LED und der entsprechenden LED-Steuereinheit ermöglicht. Zudem oder alternativ kann der Speicher auch eine Position der Fluoreszenz-LED aufweisen. Die LED-Steuereinheit ist über weitere herkömmliche kontaktlose oder kontaktbasierte Kommunikationsschnittstellen mit anderen LED-Steuereinheiten, die anderen Fluoreszenz-LED zugeordnet sind, verbunden, um beispielsweise eine Synchronisation der drei oder mehr Fluoreszenz-LED herbeizuführen, und/oder allgemein Daten auszutauschen. Ferner kann diese LED-Steuereinheit ausgebildet sein, den Anregungsstrom der eigentlichen Fluoreszenz-LED zu steuern, beispielsweise zu modulieren, um das Lichtsignal zur Positionsbestimmung, aber auch andere Lichtsignale zur Datenübertragung zu erzeugen. Ausführungsbeispiele der erfindungsgemäßen Fluoreszenz-LED weisen beispielsweise derartige LED-Steuereinheiten auf. Im Folgenden wird jedoch zwischen der eigentlichen lichterzeugenden Fluoreszenz-LED und der entsprechenden LED-Steuereinheit nicht unterschieden, und beides in Kombination ebenfalls als Fluoreszenz-LED bezeichnet.

In anderen Worten, Ausführungsbeispiele der ersten Fluoreszenz-LED L1 sind beispielsweise ausgebildet, um weißes Licht 218 mittels Mischens oder Kombinierens eines direkt erzeugten Lichtanteils 216 und eines über eine Fluoreszenzschicht 220 indirekt erzeugten Lichtanteils 214 zu erzeugen und das erste Signal S1 gleichzeitig durch Modulieren eines Anregungsstroms der ersten Fluoreszenz-LED L1 zu senden. Entsprechendes gilt für die Ausführungsbeispiele der zweiten und dritten Fluoreszenz-LED L2 und L3. Derartige Fluoreszenz-LED verfüllen somit zumindest zwei Funktionen, nämlich zum einen die Beleuchtung mit weißem oder andersfarbigem sichtbaren Licht, und zum anderen die Positionsbestimmung des beweglichen Objekts, und können optional auch die Funktionalität der Datenübertragung verfüllen.

Weitere Ausführungsbeispiele des Systems verwenden für die Bestimmung der Position direkt erzeugte Lichtanteile 214 der ersten bis dritten (oder mehr) Fluoreszenz-LED, die in demselben Wellenlängenbereich liegen, und somit mit einem Filter von anderen, beispielsweise störenden Lichtanteilen auf der Lichtsensorseite getrennt werden können. Dies kann beispielsweise dadurch erreicht werden, dass die Fluoreszenz-LED L1 bis L3 die gleichen LED-Elemente 210 verwenden und/oder baugleiche Fluoreszenz-LED sind. Um die Lichtsignale S1 bis S3, die in demselben Lichtquellenlängenbereich gesendet werden, zu unterscheiden, können Systeme gemäß Fig. 1 ausgebildet sein, Zeitmultiplexverfahren (TDM - Time Division Multiplexing), Codemultiplexverfahren (CDM - Code Division Multiplexing) und/oder andere geeignete Multiplexverfahren zu verwenden.

Bei Ausführungsbeispielen, die ein Codemultiplexverfahren verwenden, wird beispielsweise jeder Fluoreszenz-LED eine spezifische Codiervorschrift oder ein spezifischer Code zugeordnet, mit der die zu übertragende Information, beispielsweise die Senderinformation und die Sendezeitinformation gespreizt werden, um diese zu übertragen. Der Lichtsensor oder der in dem Lichtsensor integrierte Demodulator kennt die spezifischen Codes oder Codiervorschriften und kann anhand dieser die Lichtsignale S1 bis S3 unterscheiden und so entsprechend weiterverarbeiten.

Bei Ausführungsbeispielen des Systems, das mit einem Zeitmultiplexverfahren arbeitet, wird derselbe Wellenlängenbereich zeitlich in sog. Zeitschlitze unterteilt, die dann jeder Fluoreszenz-LED zugeordnet werden. Die Zuordnung der Zeitschlitze zu den Fluoreszenz-LED kann statisch oder dynamisch sein.

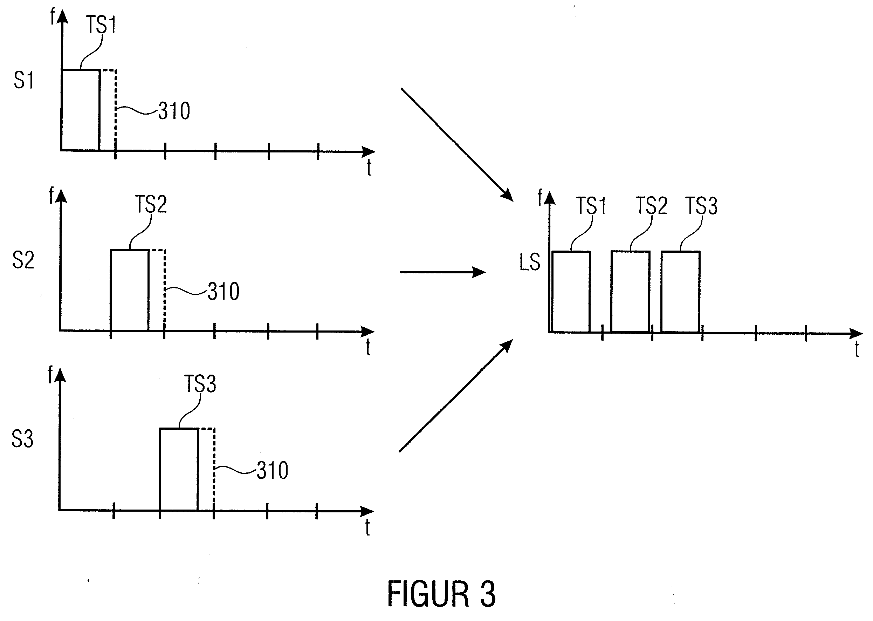

Fig. 3 zeigt eine schematische Darstellung der zeitlichen Unterteilung des Wellenlängenbereichs oder Frequenzbereichs für das erste bis dritte Signal S1 bis S3 und das von dem Lichtsensor empfangene Signal (auf der rechten Seite von Fig. 3). In Fig. 3 links oben wird beispielsweise das erste Lichtsignal S1 zu einem ersten Sendezeitpunkt T1S gesendet, der einem ersten Zeitschlitz TS1 entspricht, oder anders ausgedrückt, das erste Lichtsignal S1 wird in dem ersten Zeitschlitz TS1 gesendet. Entsprechend wird das zweite Lichtsignal S2 in einem zweiten Zeitschlitz TS2 (von dem ersten Zeitschlitz unterschiedlichen Zeitschlitz) gesendet und das dritte Lichtsignal S3 in einem dritten, von dem ersten und zweiten Zeitschlitz unterschiedlichen, dritten Zeitschlitz TS3 gesendet. Um eine störende Überlagerung der Signale S1 bis S3 aufgrund ihrer unterschiedlichen Laufzeiten auf der Lichtsensorseite oder Empfangerseite zu vermeiden, ist ein sog. Schutzzeit 310 zwischen dem ersten und dem zweiten Zeitschlitz TS1, TS2, zwischen dem zweiten Zeitschlitz und dem dritten Zeitschlitz TS2 und TS3, etc. vorgesehen. Fig. 3 zeigt rechter Hand symbolisch (nicht maßstabsgerecht) die zeitlichen Verschiebungen der Signale innerhalb der zwei Intervalle, wobei das erste Signal S1 (TS1 in Fig. 3) die geringste Verzögerung oder Verschiebung innerhalb des Zeitrasters aufweist, da es dem mobilen Objekt am nächsten gelegen ist, das zweite Signal S2 (in Fig. 3 TS2) in dem Zeitraster am weitesten nach rechts verschoben ist, da es den größten Abstand zu dem Lichtsensor LS aufweist, und das dritte Signal S3 (in Fig. TS3) mehr als das erste Signal, aber weniger als das zweite Signal innerhalb der Zeitstruktur des Zeitmultiplexverfahrens verschoben ist, da es weiter von dem Lichtsensor entfernt ist als die erste Fluoreszenz-LED jedoch näher ist als die zweite Fluoreszenz-LED. Da sowohl die Sendezeiten T1S bis T3S, als auch die T13 bis T3R bekannt sind, können derartige Zeitmultiplexverfahren sowohl für die Ortsbestimmung, beispielsweise für Laterationsverfahren oder hyperbel-basierte Verfahren, als auch für eine Datenübertragung, unabhängig von einer Positionsbestimmung verwendet werden, um Daten von den Fluoreszenz-LED L1 bis L3 zu dem Lichtsensor LS zu senden.

Ein weiteres Ausführungsbeispiels des Systems zum Ermitteln einer Position eines beweglichen Objekts basiert auf der Ausnutzung der Interferenz der Lichtsignale S1 bis S3 und bestimmt die Position des Objekts oder Lichtsensors LS durch konstruktive Interferenz. Wenn die drei unterschiedlichen Quellen oder Fluoreszenz-LED zeitsynchron senden, wird optimale konstruktive Interferenz nur dann auftreten, wenn die optische Weglänge zwischen den einzelnen Fluoreszenz-LED L1 bis L3 und dem Empfänger, also dem Lichtsensor LS, gleich ist. Für die Bestimmung der Position des beweglichen Objekts mittels konstruktiver Interferenz wird daher das Empfangssignal des Lichtsensors, das durch die Überlagerung der drei Lichtsignale S1 bis S3 entsteht, in eine Regelschleife eingebunden, die dafür sorgt, dass die konstruktive Interferenz maximal bleibt. Die Auswertung des Optimums kann aus der Amplitude und der Pulsbreite des an dem Lichtsensor LS empfangenen Signals abgeleitet werden. Auch ohne Kennung der Lichtsignale S1 bis S3 kann das System zwei Parameter variieren, die jeweils eine Zeitverzögerung der ansonsten identischen Sendeströme oder Sendesignale zwischen Fluoreszenz-LED L1 zu Fluoreszenz-LED L2 und zwischen Fluoreszenz-LED L1 und Fluoreszenz-LED L3 repräsentiert. Dieses Verfahren für die Auswertung des Gesamtsignals des Lichtsensors LS und die entsprechende Änderung der Zeitverzögerungen der einzelnen Signale, setzt eine bidirektionale Datenübertragung (Datenübertragung im Up-link und Down-link) voraus, wobei der Rückkanal oder Up-link-Kanal über eine Fluoreszenz-LED und einen entsprechenden Lichtsensor oder über andere optische oder funkbasierte kontaktlose Übertragungsverfahren erfolgen kann.

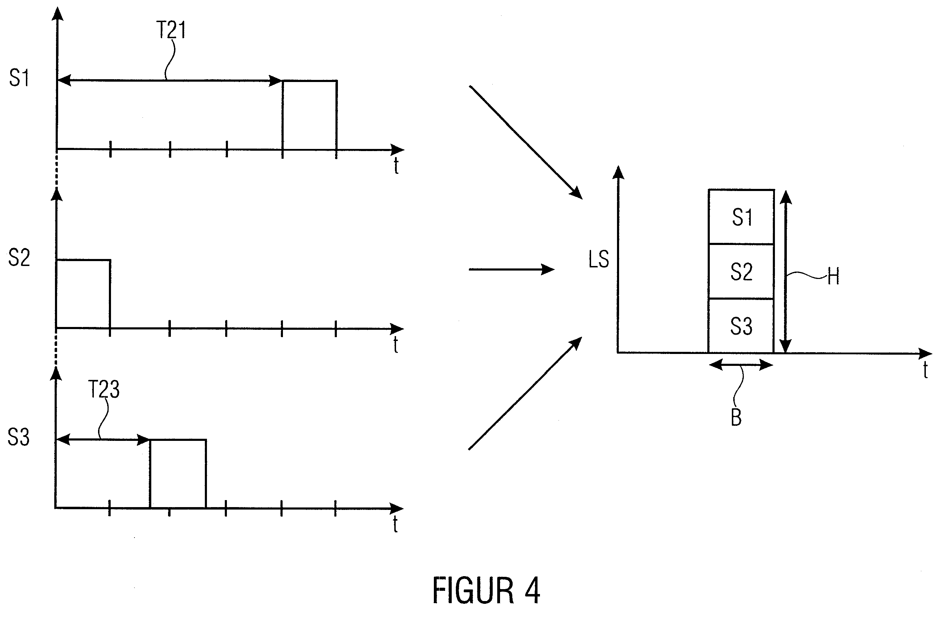

Fig. 4 zeigt eine schematische Darstellung der Zeitverzögerungen der einzelnen Signale, um bei dem Lichtsensor LS eine optimale konstruktive Interferenz zu erzielen. Die Fluoreszenz-LED L1 bis L3 senden beispielsweise dieselben Signale beispielsweise Pulse oder pulsförmige Signale (in Fig. 4 symbolisch durch gleichförmige Pulse dargestellt). Da die zweite Fluoreszenz-LED L2 am weitesten von dem Lichtsensor LS entfernt ist, wird dieses als erstes gesendet (siehe S2 in Fig. 4 und der entsprechende Zeitstrahl, der für alle Signale identisch ist, da diese synchronisiert sind). Mit einem ersten Zeitunterschied T23 wird das dritte Signal S3 gesendet, da die dritte Fluoreszenz-LED näher an dem Lichtsensor LS angeordnet ist als die zweite Fluoreszenz-LED L2, jedoch weiter davon entfernt ist, als die erste Fluoreszenz-LED L1. Als drittes Signal wird dann mit einem Zeitversatz bzw. einer Zeitdifferenz T21 das erste Signal S1 gesendet. Da die Zeitdifferenzen T23 und T21 den durch die unterschiedlichen Abstände bedingten Laufzeitunterschieden zwischen den Signalen S2 und S3 (T23) und zwischen den Signalen S2 und Signal S1 (T21) entsprechen, treffen diese bei dem Lichtsensor zu derselben Zeit ein und deren Amplitude addiert sich zu einer maximalen Höhe H. Die Breite B des Pulses entspricht in diesem optimalen Fall der konstruktiven Interferenz im Wesentlichen der Breite der ursprünglichen Einzelsignale oder Einzelpulse S1 bis S3. Entspricht die zeitliche Verzögerung oder Zeitdifferenz T21 nicht der durch den unterschiedlichen Abstand bedingten Laufzeitverzögerung, sondern ist beispielsweise kürzer, so wird das Signal S1 früher als das Signal S2 eintreffen, sich entsprechend überlagern und die Breite B vergrößern und die Größe H verringern. Entsprechend wird eine Zeitdifferenz T21, die größer ist als die entsprechende Laufzeitdifferenz zwischen den Signalen S1 und S2, dazu führen, dass das erste Signal S1 später als das zweite Signal S2 eintrifft, und somit ebenfalls die Breite erhöhen und die Höhe H reduzieren. Entsprechendes gilt für die Zeitdifferenz T23 in Bezug auf das dritte Signal S3. Durch iteratives Variieren der Zeitdifferenzen oder Differenzen in den Sendezeitpunkten T1S bis T3S der Signale S1 bis S3 entstehen verschiedene Empfangssignale, oder anders ausgedrückt, Empfangsignale mit unterschiedlichen Formen, Breiten und Höhen, die ausgewertet werden können, um wiederum iterativ diese Zeitdifferenzen oder Sendezeitpunkte so zu variieren, dass die drei Signale S1 bis S3 gleichzeitig bei dem Lichtsensor LS eintreffen, und somit, wie in Fig. 4 rechter Hand dargestellt, ein Empfangssignal mit einer maximalen Höhe H und einer minimalen Breite B entsteht.

In anderen Worten, Ausführungsbeispiele des Systems zum Ermitteln einer Position eines beweglichen Objekts, wie sie anhand von Fig. 4 erläutert wurden, weisen beispielsweise eine Anordnung von zumindest drei Fluoreszenz-LED auf, wobei eine erste Fluoreszenz-LED L1 der zumindest drei Fluoreszenz-LED ausgebildet ist, um ein erstes pulsartiges Lichtsignal S1 zu einem ersten Sendezeitpunkt T1S zu senden, wobei eine zweite Fluoreszenz-LED L2 der zumindest drei Fluoreszenz-LED ausgebildet ist, um ein zweites pulsartiges Richtsignal zu einem zweiten Sendezeitpunkt T2S zu senden und eine dritte Fluoreszenz-LED ausgebildet ist, um ein drittes pulsartiges Lichtsignal S3 zu einem dritten Sendezeitpunkt T3S zu senden. Die ersten bis dritten pulsartigen Lichtsignale S1 bis S3 weisen dabei vorzugsweise eine identische Pulsform oder Signalform auf. Der Lichtsensor LS, der an dem beweglichen Objekt 110 befestigt ist, ist ausgebildet, um das erste bis dritte Lichtsignal S1 bis S3 zu empfangen und mittels Überlagerung des ersten bis dritten Lichtsignals ein Empfangssignal zu erzeugen. Die Auswerteeinheit 120 ist dann ausgebildet, um basierend auf einer Auswertung einer Form des Empfangssignals des Lichtsensors, die zweite Fluoreszenz-LED L2 und/oder die dritte Fluoreszenz-LED L3 derart zu steuern, dass der zweite Sendezeitpunkt und/oder der dritte Sendezeitpunkt T3S derart gegenüber dem ersten Sendezeitpunkt T1S um eine erste Zeitdifferenz T12 oder T13 verschoben werden, dass das erste bis dritte Lichtsignal S1 bis S3 im Wesentlichen gleichzeitig von dem Lichtsensor LS empfangen werden. Die Auswerteeinheit 106 ist darüber hinaus ausgebildet, basierend auf der Position P1 der ersten Fluoreszenz-LED, der Position P2 der zweiten Fluoreszenz-LED, der Position P3 der dritten Fluoreszenz-LED und der ersten und/oder zweiten Sendezeitdifferenz die Position des beweglichen Objekts zu ermitteln.

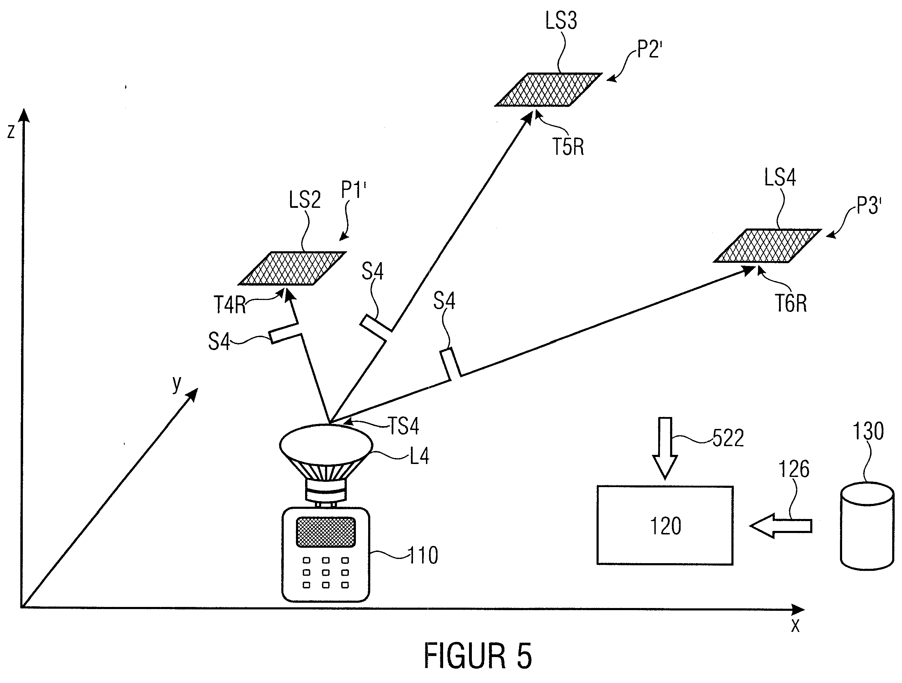

Fig. 5 zeigt ein Ausführungsbeispiel eines Systems zum Ermitteln einer Position eines beweglichen Objekts 110 mit einer Fluoreszenz-LED L4, die an dem beweglichen Objekt 110 befestigt ist, und einer Anordnung von zumindest drei Lichtsensoren LS2 bis LS4, einer Auswerteeinheit 120 und (optional) einer Datenbank oder einem Speicher 130. Die Fluoreszenz-LED L4 ist ausgebildet, zu einem Sendezeitpunkt TS4, ein Signal S4 mit einer Sendezeitinformation TS4 und einer Senderinformation zu senden, wobei die Senderin-formation eine Zuordnung des Signals S4 zu einem mobilen Gerät oder dem Lichtsensor ermöglicht, und die Sendezeitinformation TS4 eine Information über den Zeitpunkt, an dem das Lichtsignal S4 von dem Fluoreszenz-LED L4 gesendet wurde, ist. Das Lichtsignal S4 wird on dem ersten Lichtsensor LS2, der an einer Position P1' angeordnet ist, zu einem ersten Zeitpunkt T4R empfangen, von einem zweiten Lichtsensor LS3, der an einer zweiten Position P2' angeordnet ist, zu einem zweiten Empfangszeitpunkt T5R empfangen, und von dem dritten Lichtsensor LS4, der an einer dritten Position P3' angeordnet ist, zu einem dritten Empfangszeitpunkt T6R empfangen. Der erste Lichtsensor LS2 ist ausgebildet, dem empfangenen Signal S4 die erste Signalempfangszeit T4 zuzuordnen, der zweite Lichtsensor LS3 ist ausgebildet, dem empfangenen Signal S4 die zweite Signalempfangszeit T5R zuzuordnen, und der dritte Lichtsensor LS4 ist ausgebildet, dem empfangenen Lichtsignal S4 die dritte Signalempfangszeit T6R zuzuordnen.

Die Lichtsensoren LS2 bis LS4 sind mit der Auswerteeinheit 120 verbunden, beispielsweise über eine kontaktlose oder kontaktbasierte Schnittstelle (siehe Pfeil 522) und die Auswerteeinheit 120 ist ausgebildet, um basierend auf der Senderkennung (die gleichzeitig eine Signalkennung sein kann, wesentlich ist, dass die drei empfangenen Signale S4 aneinander zugeordnet werden können), der Sendezeitinformation TS4, der ersten bis dritten Empfangszeit T4R bis T6R sowie den Positionen P1' bis P3' der Lichtsensoren LS2 bis LS4 die Position des Objektes zu ermitteln. Dies kann ähnlich wie in den Ausführungsbeispielen gemäß Fig. 1 über Multilaterationsverfahren (TOA-Verfahren), hyperbel-basierten Ortungsverfahren (TDOA-Verfahren) oder anderen geeigneten Verfahren erfolgen.

Die weiteren Ausführungen bezüglich der Ausführungsbeispiele gemäß Fig. 1, die auch als Down-link-Positionsermittlungssysteme bezeichnet werden können, gelten entsprechend für die Ausführungsbeispiele gemäß Fig. 5, das auch als Up-link-Positionsermittlungsverfahren bezeichnet werden kann, insbesondere die Ausführungen zu den Fluoreszenz-LED und der Auswertung allein der direkt erzeugten Lichtanteile.

Die Lichtsensoren LS2 bis LS4 sind beispielsweise jeweils mit einer Kommunikationseinheit gekoppelt, die beispielsweise eine Lichtsensor-spezifische und eindeutige Gerätekennung enthalten, beispielsweise in einem Speicher, und einem Demodulator, um das Signal zu demodulieren und den Empfangszeitpunkt zu bestimmen, und eine Kommunikationseinheit, um beispielsweise mit der Auswerteeinheit 120 zu kommunizieren, insbesondere die für die Positionsbestimmung notwendigen Daten an diese zu senden. Die Lichtsensoren LS2 bis LS4 können ausgebildet sein, lediglich die Kennung zusammen mit den Signal relevanten Daten oder ortungsrelevanten Daten (Signal- oder Senderkennung, Sendezeit, Empfangszeit) zu senden und/oder an Stelle der Kennung oder zusätzlich zu der Kennung die Positionen P1' bis P3'. Die Auswerteeinheit 120 kann ausgebildet sein, die direkt gesendete Position zur Positionsbestimmung zu verwenden oder eine der Gerätekennung zugeordnete Position aus einer Datenbank oder einem Speicher 130, der in der Auswerteeinheit 120 integriert sein kann, oder extern implementiert sein kann.

Für eine Datenübertragung zwischen dem beweglichen Objekt, beispielsweise einem mobilen Endgerät, und den drei Lichtsensoren (oder mehr Lichtsensoren) können, wie schon Bezug auf Fig. 1 dargestellt, Zeitmultiplexverfahren, Codemultiplexverfahren oder andere geeignete Multiplexverfahren verwendet werden.

Eine Kombination der Ausführungsbeispiele gemäß Fig. 1 und Fig. 5 beschreibt somit zum einen die Möglichkeit eine kombinierte Down-link- und Up-link-Positionserfassung des mobilen Geräts durchzuführen, und/oder eine bidirektionale Datenübertragung zwischen einem mobilen Endgerät 110 (mobile Terminal beinhaltet sowohl den Lichtsensor LS1 als auch den Fluoreszenz-LED L4) und einem System, das in der Umgebung integriert ist (das sowohl die Fluoreszenz-LED L1 bis L3 als auch die Lichtsensoren LS1 bis LS4 beinhaltet), um im sichtbaren Wellenlängenbereich Daten zu senden und zu empfangen. Dabei können die erste Fluoreszenz-LED L1 und der erste Lichtsensor LS2 an derselben Position angeordnet sein, ggf. auch in einem Sende-/Empfangselement integriert sein, oder an unterschiedlichen Positionen angeordnet sein. Entsprechendes gilt für die Fluoreszenz-LED L2 und L3 sowie die Lichtsensoren LS3 und LS4.

Im Hinblick auf die vorhergehenden Erläuterungen kann daher gesagt werden, dass LED-Beleuchtungen beispielsweise zu Modulen zusammengefasst werden können und beispielsweise als Deckenbeleuchtung eingesetzt werden können. Jedes dieser Module oder Fluoreszenz-LED L1 bis L3 sendet eine Kennung. Bei mindestens drei Modulen L1 bis L3 lassen sich Sensoren LS im Raum eindeutig orten. Beispielsweise können hier Laufzeitverfahren angewendet werden. Die Genauigkeit steigt mit der Zahl der vom Sensor erfassten Quellen oder Fluoreszenz-LED. Bei einer bidirektionalen Datenübertragung kann der Lichtsensor LS seine Position an die Sendestation zurückübertragen zu einer Freigabe der Information zur Übermittlung bewirken, die beispielsweise auf einem bestimmten Positionsbereich oder Raum beschränkt ist.

Bei der Datenübertragung mit Licht kann zwischen Up-Link und Down-Link unterschieden werden. Eine Kombination beider Datenübertragungen stellt eine bidirektionale Übertragung dar. Die Bidirektionalität lässt sich auch über alternative Übermittlungstechnologien, beispielsweise IrDA oder Funk erreichen. Fig. 1 beschreibt eine Positionsbestimmung eines beweglichen Empfangsgeräts 110 im Down-Link. Die Datensignale S1 bis S3 der ortsfesten Lichtquellen oder Fluoreszenz-LED L1 bis L3 enthalten jeweils einen Zeitstempel T1S bis T3S, der gemeinsam mit einer Senderkennung gesendet wird. Je nachdem, wo sich der Empfänger oder Lichtsensor LS in dem Raum befindet, kann aus der Zeitverzögerung der empfangenen Signale eine Ortsbestimmung errechnet werden. Bei bidirektionaler Datenübertragung können die Signale auch so aufbereitet werden, dass sie sich am Empfänger zeitlich exakt überlagern (konstruktive Interferenz). Die jeweils zur Kompensation erforderlichen Zeitverzögerungen enthalten die räumliche Information. Als Lichtquelle können Fluoreszenz-LED eingesetzt werden und, vorzugsweise, der direkt erzeugte Lichtanteil ausgewertet werden. Dabei sind die Wellenlängen, auch des direkt erzeugten Lichtanteils, nicht auf den sichtbaren Bereich zwischen 400 nm und 800 nm begrenzt, wie beispielsweise anhand der UV-Fluoreszenz-LED erläutert. In Fig. 5 ist ein Schema für eine Positionsbestimmung im Up-Link dargestellt. Die bewegliche LED-Lichtquelle, eine Fluoreszenz-LED L4, sendet in Sichtkontakt ein Zeitsignal S4. Im Raum befinden sich ortsfest montierte Detektoren oder Lichtsensoren LS2 bis LS4, die das Zeitsignal S4 empfangen. Die Signale S4 erreichen die Lichtsensoren mit einer Zeitverzögerung, die mit der Position der Strahlungsquelle oder Fluoreszenz-LED L4 korreliert ist. Die Ortsinformation der beweglichen Lichtquelle L4 oder des beweglichen Empfängers LS kann bei direktionaler Verbindung zur Steuerung der übertragenen Daten eingesetzt werden. Bei unidirektionalen Anwendungen erfolgt die Ortsbestimmung auf der Seite des Detektors, also auf Seiten der Lichtsensoren. Die Ortsinformation dient dann beispielsweise der Legitimierung und Zuordnung bei der sicheren Übertragung.

Ausführungsbeispiele der Erfindung, die zuvor anhand, beispielsweise der Figuren 1 und 3 bis 5 beschrieben wurden, können, wie eingangs erläutert, auch mit RGB-LED als Allgemeinbeleuchtungs-LED realisiert werden. Ausführungsbeispiele gemäß Fig. 1 (Downlink-Ortung) weisen beispielsweise anstelle der ersten Fluoreszenz-LED eine erste RGB-LED L1 als erste Allgemeinbeleuchtungs-LED auf, anstelle der zweiten Fluoreszenz-LED eine zweite RGB-LED als zweite Allgemeinbeleuchtungs-LED und anstelle der dritten Fluoreszenz-LED eine dritte RGB-LED L3 als dritte Allgemeinbeleuchtungs-LED auf. Die RGB-LED L1 bis L3 sind ausgebildet, um weißes oder andersfarbiges Licht mittels Mischen verschiedenfarbiger direkt erzeugter Lichtanteile (von den jeweiligen, typischerweise monochromatischen LED-Elementen erzeugt) zu erzeugen, und die Lichtsignale S1 bis S3 gleichzeitig durch Modulieren eines Anregungsstroms der RGB-LED zu senden, z.B. durch Modulieren eines Anregungsstroms jeweils nur eines LED-Elements der RGB-LED.

In einem Ausführungsbeispiel gemäß Fig. 5 (Uplink-Ortung) können Ausführungsbeispiele statt der Fluoreszenz-LED L4 eine RGB-LED L4 als Allgemeinbeleuchtungs-LED aufweisen.

Die vorgenannten Ausführungen gelten auch für entsprechende Verfahren zum Ermitteln einer Position des beweglichen Objekts. Daher stellen Aspekte, die im Zusammenhang mit einer Vorrichtung oder einem System beschrieben wurden, auch eine Beschreibung des entsprechenden Verfahrens dar, so dass ein Block oder ein Bauelement einer Vorrichtung auch als ein entsprechender Verfahrensschritt oder als ein Merkmal eines Verfahrensschritts zu verstehen ist. Analog dazu stellen Aspekte, die im Zusammenhang mit einem als ein Verfahrensschritt beschrieben wurden, auch eine Beschreibung eines entsprechenden Blocks oder Details oder Merkmals oder einer entsprechenden Vorrichtung.

Ausführungsbeispiele der Erfindung können die Funktionalität der Positionsbestimmung in Kommunikationsverfahren mit nicht-kohärenter Strahlung integrieren, und somit auch als Verfahren zur Kommunikation mit nicht-kohärenter Strahlung durch integrierte Navigation bezeichnet werden.

Je nach den Implementierungsanordnungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blue-Ray-Disk, einer CD, eines ROM, eines PROM, eines EPROM, eines EEPROM oder eines Flash-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, dass eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium für ein computerlesbares Medium), auf dem das Computerprogramm zum Durchführen eines der hierin beschriebenen Verfahrens aufgezeichnet ist.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen der hierin beschriebenen Verfahren installiert ist.

Bei manchen Ausführungsbeispielen kann ein programmierbares Logikbauelement, z. B. ein feldprogrammierbares Gate-Array (FPGA - Field Programmable Gate Array) dazu verwendet werden, manche oder alle Funktionalitäten der hierin beschriebenen Verfahren durchzuführen. Bei manchen Ausführungsbeispielen kann ein feldprogrammierbares Gate-Array mit einem Mikroprozessor zusammenwirken, um eines der hierin beschriebenen Verfahren durchzuführen. Allgemein werden die Verfahren bei einigen Ausführungsbeispielen seitens seiner beliebigen Art für Vorrichtungen durchgeführt. Diese kann eine universell einsetzbare Hardware, wie ein Computerprozessor (Central Processing Unit-CPU) oder für das Verfahren spezifische Hardware, wie beispielsweise ein ASIC (Application Specific Integrated Circuit).

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist es beabsichtigt, dass die Erfindung lediglich durch den Schutzumfang der nachstehenden Patentansprüche nicht durch die spezifischen Einzelheiten, die anhand der Beschreibung und der Erläuterung der Ausführungsbeispiele hierin präsentiert wurden, beschränkt sei.

## Patentansprüche

1. System zum Ermitteln einer Position eines beweglichen Objekts (110), mit den folgenden Merkmalen:
einer Anordnung von mindestens drei Allgemeinbeleuchtungs-LEDs (L1-L3) mit folgenden Merkmalen:
einer ersten Allgemeinbeleuchtungs-LED (L1), die ausgebildet ist, um ein erstes Lichtsignal (S1) zu senden, das eine erste Sendezeitinformation (T1S) und eine erste Senderinformation in einem ersten Wellenlängenbereich aufweist, wobei die erste Senderinformation zumindest eine Bestimmung einer Position (P1) der ersten Allgemeinbeleuchtungs-LED (L1) ermöglicht, und die erste Sendezeitinformation (T1S) eine Information über einen Zeitpunkt ist, an dem das erste Signal (S1) gesendet wurde;
einer zweiten Allgemeinbeleuchtungs-LED (L2), die ausgebildet ist, um ein zweites Lichtsignal (S2) zu senden, das eine zweite Sendezeitinformation (T2S) und eine zweite Senderinformation in einem zweiten Wellenlängenbereich aufweist, wobei die zweite Senderinformation zumindest eine Bestimmung einer Position (P2) der zweiten Allgemeinbeleuchtungs-LED ermöglicht, und die zweite Sendezeitinformation (T2S) eine Information über einen Zeitpunkt ist, an dem das zweite Signal (S2) gesendet wurde; und
einer dritten Allgemeinbeleuchtungs-LED (L3), die ausgebildet ist, um ein drittes Lichtsignal (S3) zu senden, das eine dritte Sendezeitinformation (T3S) und eine dritte Senderinformation in einem dritten Wellenlängenbereich aufweist, wobei die dritte Senderinformation zumindest eine Bestimmung einer Position der dritten Allgemeinbeleuchtungs-LED ermöglicht, und die dritte Sendezeitinformation (T3S) eine Information über einen Zeitpunkt ist, an dem das dritte Signal (S3) gesendet wurde,
wobei der erste Wellenlängenbereich, der zweite Wellenlängenbereich und der dritte Wellenlängenbereich sich in einem Überlappungsbereich zumindest teilweise überlappen, und
wobei die erste, zweite und dritte Allgemeinbeleuchtungs-LED (L1-L3) jeweils eine definierte, bekannte Position (P1-P3) aufweisen;
einem Lichtsensor (LS), der an dem beweglichen Objekt (110) befestigt ist, und ausgebildet ist, das erste bis dritte Lichtsignal (S1-S3) in dem Überlappungsbereich zu empfangen und dem ersten Lichtsignal (S1) eine erste Signalempfangszeitinformation (T1R) zuzuordnen, dem zweiten Lichtsignal (S2) eine zweite Signalempfangszeitinformation (T2R) und dem dritten Lichtsignal (S3) eine dritte Signalempfangszeitinformation (T3R) zuzuordnen; und
einer Auswerteeinheit (120), die ausgebildet ist, um basierend auf der ersten bis dritten Senderinformation, der ersten bis dritten Sendezeitinformation (T1S-T3S) und der ersten bis dritten Signalempfangszeitinformation (T1R-T3R) die Position des Objekts zu ermitteln,
wobei die erste Allgemeinbeleuchtungs-LED eine erste Fluoreszenz-LED (L1) ist, die ausgebildet ist, um weißes Licht für eine allgemeine Beleuchtung mittels Mischens eines direkt erzeugten Lichtanteils (216) und eines über eine Fluoreszenzschicht (220) indirekt erzeugten Lichtanteils (214) zu erzeugen, und das erste Lichtsignal (S1) gleichzeitig durch Modulieren eines Anregungsstroms der ersten Fluoreszenz-LED (L1) zu senden, wobei ein Wellenlängenbereich des von der ersten Fluoreszenz-LED (L1) direkt erzeugten Lichtanteils den ersten Wellenlängenbereich bildet,
wobei die zweite Allgemeinbeleuchtungs-LED eine zweite Fluoreszenz-LED ist, die ausgebildet ist, um weißes Licht für eine allgemeine Beleuchtung mittels Mischens eines direkt erzeugten Lichtanteils und eines über eine Fluoreszenzschicht indirekt erzeugten Lichtanteils zu erzeugen, und das zweite Signal gleichzeitig durch Modulieren eines Anregungsstroms der zweiten Fluoreszenz-LED zu senden, wobei ein Wellenlängenbereich des von der zweiten Fluoreszenz-LED (L2) direkt erzeugten Lichtanteils den zweiten Wellenlängenbereich bildet, und
wobei die dritte Allgemeinbeleuchtungs-LED eine dritte Fluoreszenz-LED (L3) ist, die ausgebildet ist, um weißes Licht für eine allgemeine Beleuchtung mittels Mischens eines direkt erzeugten Lichtanteils und eines über eine Fluoreszenzschicht indirekt erzeugten Lichtanteils zu erzeugen, und das dritte Signal (S3) gleichzeitig durch Modulieren eines Anregungsstroms der dritten Fluoreszenz-LED zu senden, wobei ein Wellenlängenbereich des von der dritten Fluoreszenz-LED (L3) direkt erzeugten Lichtanteils den dritten Wellenlängenbereich bildet.

2. System nach Anspruch 1, mit folgenden Merkmalen:
einem Sender (L4), der an dem beweglichen Objekt (110) befestigt ist; und
einem Empfänger (LS2), wobei der Sender (L4) ausgebildet ist, um über eine kontaktlose Schnittstelle ein Signal an den Empfänger (LS2) für eine Datenübertragung zu senden.

3. System nach Anspruch 1 oder 2, wobei die Anordnung der zumindest drei Allgemeinbeleuchtungs-LED (L1-L3) und der Lichtsensor (LS) ausgebildet sind, das erste bis dritte Lichtsignal (S1-S3) in einem Zeitmultiplexverfahren zu übertragen,
wobei die erste Allgemeinbeleuchtungs-LED (L1) ausgebildet ist, um das erste Lichtsignal (S1) in einem ersten Zeitschlitz (TS1) des Zeitmultiplexverfahrens zu senden, die zweite Allgemeinbeleuchtungs-LED (L2) ausgebildet ist, um das zweite Lichtsignal (S2) in einem zweiten Zeitschlitz (TS2) des Zeitmultiplexverfahrens zu senden, und die dritte Allgemeinbeleuchtungs-LED (L3) ausgebildet ist, um das dritte Lichtsignal (S3) in einem dritten Zeitschlitz (TS3) des Zeitmultiplexverfahrens zu senden.

4. System nach einem der Ansprüche 1 bis 3, wobei der Lichtsensor (LS) mit den zumindest drei Allgemeinbeleuchtungs-LED (L1-L3) synchronisiert ist und eine gemeinsame Zeitreferenz hat, und die Auswerteeinheit (120) ausgebildet ist, um die Position des Objekts mittels eines Empfangszeitverfahrens, TOA-Verfahren, zu ermitteln.

5. System nach einem der Ansprüche 1 bis 4, mit einem Speicher, in dem die erste Senderinformation und eine dieser zugeordnete erste Position (P1) der ersten Allgemeinbeleuchtungs-LED gespeichert ist, in dem die zweite Senderinformation und eine dieser zugeordnete zweite Position (P2) der zweiten Allgemeinbeleuchtungs-LED (L2) gespeichert ist, und in dem die dritte Senderinformation und eine dieser dritten Senderinformation zugeordnete dritte Position (P3) der dritten Allgemeinbeleuchtungs-LED (L3) gespeichert ist;
wobei die Auswerteeinheit (120) ausgebildet ist, um die Position des beweglichen Objekts (110) basierend auf der ersten bis dritten Senderinformation und diesen zugeordneten ersten bis dritten Positionen (P1-P3) der ersten bis dritten Allgemeinbeleuchtungs-LED (L1-L3), der ersten bis dritten Sendezeitinformation (T1S-T3S) und der ersten bis dritten Signalempfangszeitinformation (T1R-T3R) zu ermitteln.

6. System nach einem der Ansprüche 1 bis 5, wobei der Lichtsensor (LS) ausgebildet ist, nur Lichtanteile in dem Überlappungsbereich auszuwerten, um die erste bis dritte Signalempfangszeit zu bestimmen.

7. Verfahren zum Ermitteln einer Position eines beweglichen Objekts (110), mit den folgenden Schritten:
Senden eines ersten Lichtsignals (S1), das eine erste Sendezeitinformation (T1S) und eine erste Senderinformation in einem ersten Wellenlängenbereich aufweist, durch eine erste Allgemeinbeleuchtungs-LED (L1), wobei die erste Senderinformation zumindest eine Bestimmung einer Position (P1) der ersten Allgemeinbeleuchtungs-LED (L1) ermöglicht und die erste Sendezeitinformation eine Information über einen Zeitpunkt, an dem erste Signal (S1) gesendet wurde, ist;
Senden eines zweiten Lichtsignals (S2), das eine zweite Sendezeitinformation (T2S) und eine zweite Senderinformation in einem zweiten Wellenlängenbereich aufweist, durch eine zweite Allgemeinbeleuchtungs-LED (L2), wobei die zweite Senderinformation zumindest eine Bestimmung einer Position (P2) der zweiten Allgemeinbeleuchtungs-LED (L2) ermöglicht, und die zweite Sendezeitinformation (T2S) eine Information über einen Zeitpunkt ist, an dem das zweite Signal (S2) gesendet wurde;
Senden eines dritten Lichtsignals (S3), das eine dritte Sendezeitinformation (T3S) und eine dritte Senderinformation in einem dritten Wellenlängenbereich aufweist, durch eine dritte Allgemeinbeleuchtungs-LED (L3), wobei die dritte Senderinformation zumindest eine Bestimmung einer Position der dritten Allgemeinbeleuchtungs-LED ermöglicht, und die dritte Sendezeitinformation (T3S) eine Information über einen Zeitpunkt ist, an dem das dritte Signal (S3) gesendet wurde, wobei der erste Wellenlängenbereich, der zweite Wellenlängenbereich und der dritte Wellenlängenbereich sich in einem Überlappungsbereich zumindest teilweise überlappen;
Empfangen des ersten bis dritten Lichtsignals (S1-S3) in dem Überlappungsbereich durch einen Lichtsensor (LS), der an dem beweglichen Objekt (110) befestigt ist;
Zuordnen einer ersten Signalempfangszeitinformation (T1R) zu dem ersten Lichtsignal (S1);
Zuordnen einer zweiten Signalempfangszeitinformation (T2R) zu dem zweiten Lichtsignal (S2);
Zuordnen einer dritten Signalempfangszeitinformation (T3R) zu dem dritten Lichtsignal (S3); und
Ermitteln der Position des Objekts basierend auf der ersten bis dritten Senderinformation, der ersten bis dritten Sendezeitinformation (T1S-T3S) und der ersten bis dritten Signalempfangszeitinformation (T1R-T3R),
wobei die erste Allgemeinbeleuchtungs-LED eine erste Fluoreszenz-LED (L1) ist, die ausgebildet ist, um weißes Licht für eine allgemeine Beleuchtung mittels Mischens eines direkt erzeugten Lichtanteils (216) und eines über eine Fluoreszenzschicht (220) indirekt erzeugten Lichtanteils (214) zu erzeugen, und das erste Lichtsignal (S1) gleichzeitig durch Modulieren eines Anregungsstroms der ersten Fluoreszenz-LED (L1) zu senden, wobei ein Wellenlängenbereich des von der ersten Fluoreszenz-LED (L1) direkt erzeugten Lichtanteils den ersten Wellenlängenbereich bildet,
wobei die zweite Allgemeinbeleuchtungs-LED eine zweite Fluoreszenz-LED ist, die ausgebildet ist, um weißes Licht für eine allgemeine Beleuchtung mittels Mischens eines direkt erzeugten Lichtanteils und eines über eine Fluoreszenzschicht indirekt erzeugten Lichtanteils zu erzeugen, und das zweite Signal gleichzeitig durch Modulieren eines Anregungsstroms der zweiten Fluoreszenz-LED zu senden, wobei ein Wellenlängenbereich des von der zweiten Fluoreszenz-LED (L2) direkt erzeugten Lichtanteils den zweiten Wellenlängenbereich bildet, und
wobei die dritte Allgemeinbeleuchtungs-LED eine dritte Fluoreszenz-LED (L3) ist, die ausgebildet ist, um weißes Licht für eine allgemeine Beleuchtung mittels Mischens eines direkt erzeugten Lichtanteils und eines über eine Fluoreszenzschicht indirekt erzeugten Lichtanteils zu erzeugen, und das dritte Signal (S3) gleichzeitig durch Modulieren eines Anregungsstroms der dritten Fluoreszenz-LED zu senden,
wobei ein Wellenlängenbereich des von der dritten Fluoreszenz-LED (L3) direkt erzeugten Lichtanteils den dritten Wellenlängenbereich bildet.

## Claims

1. A system for determining a position of a moving object (110), comprising:
an arrangement having at least three general lighting LEDs (L1-L3), comprising:
a first general lighting LED (L1) implemented to transmit a first light signal (S1) comprising a first transmission time information (T1S) and a first transmitter information in a first wavelength range, wherein the first transmitter information enables at least a determination of a position (P1) of the first general lighting LED (L1), and the first transmission time information (T1S) is information on a point in time when the first signal (S1) was transmitted;
a second general lighting LED (L2) implemented to transmit a second light signal (S2) comprising a second transmission time information (T2S) and a second transmitter information in a second wavelength range, wherein the second transmitter information enables at least a determination of a position (P2) of the second general lighting LED, and the second transmission time information (T2S) is information on a point in time when the second signal (S2) was transmitted; and
a third general lighting LED (L3) implemented to transmit a third light signal (S3) comprising a third transmission time information (T3S) and a third transmitter information in a third wavelength range, wherein the third transmitter information enables at least a determination of a position of the third general lighting LED, and the third transmission time information (T3S) is information on a point in time when the third signal (S3) was transmitted,
wherein the first wavelength range, the second wavelength range and the third wavelength range at least partially overlap in an overlapping range, and
wherein the first, second and third general lighting LED (L1-L3) each comprise a defined known position (P1-P3);
a light sensor (LS) mounted to the moving object (110) and implemented to receive the first to third light signals (S1-S3) in the overlapping range and allocate a first signal receive time information (T1R) to the first light signal (S1), allocate a second signal receive time information (T2R) to the second light signal (S2) and a third signal receive time information (T3R) to the third light signal (S3); and
an evaluation unit (120) implemented to determine the position of the object based on the first to third transmitter information, the first to third transmission time information (T1S-T3S) and the first to third signal receive time information (T1R-T3R),
wherein the first general lighting LED is a first fluorescence LED (L1) implemented to generate white light for general lighting by mixing a directly generated light portion (216) and a light portion (214) indirectly generated via a fluorescence layer (220), and to transmit the first light signal (S1) simultaneously by modulating an excitation current of the first fluorescence LED (L1), wherein a wave length range of the light portion directly generated by the first fluorescence LED (L1) forms the first wave length range,
wherein the second general lighting LED is a second fluorescence LED implemented to generate white light for general lighting by mixing a directly generated light portion and a light portion indirectly generated via a fluorescence layer, and to transmit the second signal simultaneously by modulating an excitation current of the second fluorescence LED, wherein a wave length range of the light portion directly generated by the second fluorescence LED (L2) forms the second wave length range, and
wherein the third general lighting LED is a third fluorescence LED (L3) implemented to generate white light for general lighting by mixing a directly generated light portion and a light portion indirectly generated via a fluorescence layer, and to simultaneously transmit the third signal (S3) by modulating an excitation current of the third fluorescence LED, wherein a wave length range of the light portion directly generated by the third fluorescence LED (L3) forms the third wave length range.

2. The system according to claim 1, comprising:
a transmitter (L4) mounted to the moving object (110); and
a receiver (LS2), wherein the transmitter (L4) is implemented to transmit a signal to the receiver (LS2) for a data transfer via a contactless interface.

3. The system according to one of claims 1 or 2, wherein the arrangement of the at least three general lighting LEDs (L1-L3) and the light sensor (LS) are implemented to transfer the first to third light signal (S1-S3) in a time division multiplexing method, wherein the first general lighting LED (L1) is implemented to transmit the first light signal (S1) in a first time slot (TS1) of the time division multiplexing method, the second general lighting LED (L2) is implemented to transmit the second light signal (S2) in a second time slot (TS2) of the time division multiplexing method and the third general lighting LED (L3) is implemented to transmit the third light signal (S3) in a third time slot (TS3) of the time division multiplexing method.

4. The system according to one of claims 1 to 3, wherein the light sensor (LS) is synchronized with the at least three general lighting LEDs (L1-L3) and has a common time reference, and the evaluation unit (120) is implemented to determine the position of the object by means of a time of arrival method, TOA method.

5. The system according to one of claims 1 to 4, comprising a memory in which the first transmitter information and a first position (P1) of the first general lighting LED associated thereto are stored, in which the second transmitter information and a second position (P2) of the second general lighting LED (L2) associated thereto are stored, in which the third transmitter information and a third position (P3) of the third general lighting LED (L3) associated thereto are stored;
wherein the evaluation unit (120) is implemented to determine the positon of the moving object (110) based on the first to third transmitter information and the first to third positions (P1-P3) of the first to third general lighting LEDs (L1-L3) associated thereto, the first to third transmission time information (T1S-T3S) and the first to third signal receive time information (T1R-T3R).

6. The system according to claims 1 to 5, wherein the light sensor (LS) is implemented to evaluate only light portions in the overlapping range to determine the first to third signal receive time.

7. A method for determining a position of a moving object (110), comprising:
transmitting a first light signal (S1) comprising a first transmission time information (T1S) and a first transmitter information in a first wave length range via a first general lighting LED (L1), wherein the first transmitter information enables at least a determination of a position (P1) of the first general lighting LED (L1), and the first transmission time information is information on a point in time when the first signal (S1) was transmitted;
transmitting a second light signal (S2) comprising a second transmission time information (T2S) and a second transmitter information in a second wave length range via a second general lighting LED (L2), wherein the second transmitter information enables at least a determination of a position (P2) of the second general lighting LED (L2), and the second transmission time information (T2S) is information on a point in time when the second signal (S2) was transmitted;
transmitting a third light signal (S3) comprising a third transmission time information (T3S) and a third transmitter information in a third wave length range via a third general lighting LED (L3), wherein the third transmitter information enables at least a determination of a position of the third general lighting LED, and the third transmission time information (T3S) is information on a point in time when the third signal (S3) was transmitted, wherein the first wavelength range, the second wavelength range and the third wavelength range at least partially overlap in an overlapping range;
receiving the first to third light signals (S1-S3) in the overlapping range by a light sensor (LS) mounted to the moving object (110);
allocating a first signal receive time information (T1R) to the first light signal (S 1);
allocating a second signal receive time information (T2R) to the second light signal (S2);
allocating a third signal receive time information (T3R) to the third light signal (S3); and
determining the position of the object based on the first to third transmitter information, the first to third transmission time information (T1S-T3S) and the first to third signal receive time information (T1R-T3R).
wherein the first general lighting LED is a first fluorescence LED (L1) implemented to generate white light for general lighting by mixing a directly generated light portion (216) and a light portion (214) indirectly generated via a fluorescence layer (220), and to transmit the first light signal (S1) simultaneously by modulating an excitation current of the first fluorescence LED (L1), wherein a wave length range of the light portion directly generated by the first fluorescence LED (L1) forms the first wave length range,
wherein the second general lighting LED is a second fluorescence LED implemented to generate white light for general lighting by mixing a directly generated light portion and a light portion indirectly generated via a fluorescence layer, and to transmit the second signal simultaneously by modulating an excitation current of the second fluorescence LED, wherein a wave length range of the light portion directly generated by the second fluorescence LED (L2) forms the second wave length range, and
wherein the third general lighting LED is a third fluorescence LED (L3) implemented to generate white light for general lighting by mixing a directly generated light portion and a light portion indirectly generated via a fluorescence layer, and to simultaneously transmit the third signal (S3) by modulating an excitation current of the third fluorescence LED, wherein a wave length range of the light portion directly generated by the third fluorescence LED (L3) forms the third wave length range.

## Revendications

1. Système de détermination d'une position d'un objet mobile (110), aux caractéristiques suivantes:
un aménagement d'au moins trois LED d'éclairage général (L1 à L3) aux caractéristiques suivantes:
une première LED d'éclairage général (L1) réalisée pour transmettre un premier signal lumineux (S1) présentant une première information de temps de transmission (T1S) et une première information d'émetteur dans une première plage de longueurs d'onde, la première information d'émetteur permettant au moins une détermination d'une position (P1) de la première LED d'éclairage général (L1) et la première information de temps de transmission (T1S) étant une information sur le moment où a été transmis le premier signal (S1);
une deuxième LED d'éclairage général (L2) réalisée pour transmettre un deuxième signal lumineux (S2) présentant une deuxième information de temps de transmission (T2S) et une deuxième information d'émetteur dans une deuxième plage de longueurs d'onde, la deuxième information d'émetteur permettant au moins une détermination d'une position (P2) de la deuxième LED d'éclairage général et la deuxième informations de temps de transmission (T2S) étant une information sur un moment où a été transmis le deuxième signal (S2); et
une troisième LED d'éclairage général (L3) réalisée pour transmettre un troisième signal lumineux (S3) présentant une troisième information de temps de transmission (T3S), et une troisième information d'émetteur dans une troisième plage de longueurs d'onde, la troisième information d'émetteur permettant au moins une détermination d'une position de la troisième LED d'éclairage général et la troisième information de temps de transmission (T3S) étant une information sur un moment où a été transmis le troisième signal (S3),
dans lequel la première plage de longueurs d'onde, la deuxième plage de longueurs d'onde et la troisième plage de longueurs d'onde se recouvrent au moins partiellement dans une zone de recouvrement, et
dans lequel les première, deuxième et troisième LED d'éclairage général (L1 à L3) présentent, chacune, une position définie connue (P1 à P3);
un capteur de lumière (LS) fixé à l'objet mobile (110) et réalisé pour recevoir le premier au troisième signal lumineux (S1 à S3) dans la zone de recouvrement et pour associer au premier signal lumineux (S1) une première information de temps de réception de signal (T1R), pour associer au deuxième signal lumineux (S2) une deuxième information de temps de réception de signal (T2R) et au troisième signal lumineux (S3) une troisième information de temps de réception de signal (T3R); et
une unité d'évaluation (120) réalisée pour déterminer la position de l'objet sur base de la première à la troisième information d'émetteur, de la première à la troisième information de temps de transmission (T1S à T3S) et de la première à la troisième information de temps de réception de signal (T1R à T3R),
dans lequel la première LED d'éclairage général est une première LED fluorescente (L1) réalisée pour générer de la lumière blanche pour un éclairage général en mélangeant une part de lumière générée directement (216) et une part de lumière générée indirectement (214) sur une couche fluorescente (220), et pour transmettre en même temps le premier signal lumineux (S1) en modulant un courant d'excitation de la première LED fluorescente (L1), une plage de longueurs d'onde de la part de lumière générée directement par la première LED fluorescente (L1) constituant la première plage de longueurs d'onde,
dans lequel la deuxième LED d'éclairage général est une deuxième LED fluorescente réalisée pour générer de la lumière blanche pour un éclairage général en mélangeant une part de lumière générée directement et une part de lumière générée indirectement sur une couche fluorescente, et pour transmettre en même temps le deuxième signal en modulant un courant d'excitation de la deuxième LED fluorescente, une plage de longueurs d'onde de la part de lumière générée directement par la deuxième LED fluorescente (L2) constituant la deuxième plage de longueurs d'onde, et
dans lequel la troisième LED d'éclairage général est une troisième LED fluorescente (L3) réalisée pour générer de la lumière blanche pour un éclairage général en mélangeant une part de lumière générée directement et une part de lumière générée indirectement sur une couche fluorescente, et pour transmettre en même temps le troisième signal (S3) en modulant un courant d'excitation de la troisième LED fluorescente, une plage de longueurs d'onde de la part de lumière générée directement par la troisième LED fluorescente (L3) constituant la troisième plage de longueurs d'onde.

2. Système selon la revendication 1, aux caractéristiques suivantes:
un émetteur (L4) fixé à l'objet mobile (110); et
un récepteur (LS2), l'émetteur (L4) étant réalisé pour transmettre par l'intermédiaire d'une interface sans contact un signal au récepteur (LS2) pour une transmission de données.

3. Système selon la revendication 1 ou 2, dans lequel l'aménagement des au moins trois LED d'éclairage général (L1 à L3) et le capteur de lumière (LS) sont réalisés pour transmettre le premier au troisième signal lumineux (S1 à S3) par un procédé de multiplexage par répartition dans le temps, la première LED d'éclairage général (L1) étant réalisée pour transmettre le premier signal lumineux (S1) dans un premier intervalle de temps (TS1) du procédé de multiplexage par répartition dans le temps, la deuxième LED d'éclairage général (L2) étant réalisée pour transmettre le deuxième signal lumineux (S2) dans un deuxième intervalle de temps (TS2) du procédé de multiplexage par répartition dans le temps, et la troisième LED d'éclairage général (L3) étant réalisée pour transmettre le troisième signal lumineux (S3) dans un troisième intervalle de temps (TS3) du procédé de multiplexage par répartition dans le temps.

4. Système selon l'une des revendications 1 à 3, dans lequel le capteur de lumière (LS) est synchronisé avec les au moins trois LED d'éclairage général (L1 à L3) et présente une référence de temps commune, et l'unité d'évaluation (120) est réalisée pour déterminer la position de l'objet au moyen d'un procédé de temps de réception, procédé TOA.

5. Système selon l'une des revendications 1 à 4, avec une mémoire
dans laquelle est mémorisée la première information d'émetteur et une première position (P1) de la première LED d'éclairage général associée à cette dernière, dans laquelle est mémorisée la deuxième information d'émetteur et une deuxième position (P2) de la deuxième LED éclairage général (L2) associée à cette dernière, et dans laquelle est mémorisée la troisième information d'émetteur et une troisième position (P3) de la troisième LED d'éclairage général (L3) associée à cette troisième information d'émetteur;
dans lequel l'unité d'évaluation (120) est réalisée pour déterminer la position de l'objet mobile (110) sur base de la première à la troisième information d'émetteur et de la première à la troisième position (P1 à P3) de la première à la troisième LED d'éclairage général (L1 à L3) associées à ces dernières, de la première à la troisième information de temps de transmission (T1S à T3S) et de la première à la troisième information de temps de réception de signal (T1R à T3R).

6. Système selon l'une des revendications 1 à 5, dans lequel le capteur de lumière (LS) est réalisé pour n'évaluer que les parts de lumière dans la zone de recouvrement, pour déterminer le premier au troisième temps de réception de signal.

7. Procédé pour déterminer une position d'un objet mobile (110), aux étapes suivantes consistant à:
transmettre un premier signal lumineux (S1) présentant une première information de temps de transmission (T1S) et une première information d'émetteur dans une première plage de longueurs d'ondes, par une première LED d'éclairage général (L1), la première information d'émetteur permettant au moins une détermination d'une position (P1) de la première LED d'éclairage général (L1) et la première information de temps de transmission étant une information sur un moment où a été transmis le premier signal (S1);
transmettre un deuxième signal lumineux (S2) présentant une deuxième information de temps de transmission (T2S) et une deuxième information d'émetteur dans une deuxième plage de longueurs d'onde, par une deuxième LED d'éclairage général (L2), la deuxième information d'émetteur permettant au moins une détermination d'une position (P2) de la deuxième LED d'éclairage général (L2), et la deuxième information de temps de transmission (T2S) étant une information sur un moment où a été transmis le deuxième signal (S2);
transmettre un troisième signal lumineux (S3) présentant une troisième information de temps de transmission (T3S) et une troisième information d'émetteur dans une troisième plage de longueurs d'onde, par une troisième LED d'éclairage général (L3), la troisième information d'émetteur permettant au moins une détermination d'une position de la troisième LED d'éclairage général et la troisième information de temps de transmission (T3S) étant une information sur un moment où a été transmis le troisième signal (S3), la première plage de longueurs d'onde, la deuxième plage de longueurs d'onde et la troisième plage de longueurs d'ondes se recouvrant au moins partiellement dans une zone de recouvrement;
recevoir le premier au troisième signal lumineux (S1 à S3) dans la zone de recouvrement par un détecteur de lumière (LS) qui est fixé à l'objet mobile (110);
associer une première information de temps de réception de signal (T1R) au premier signal lumineux (S1);
associer une deuxième information de temps de réception de signal (T2R) au deuxième signal lumineux (S2);
associer une troisième information de temps de réception de signal (T3R) au troisième signal lumineux (S3); et
déterminer la position de l'objet sur base de la première à la troisième information d'émetteur, de la première à la troisième information de temps de transmission (T1S à T3S) et de la première à la troisième information de temps de réception de signal (T1R à T3R),
dans lequel la première LED d'éclairage général est une première LED fluorescente (L1) réalisée pour générer de la lumière blanche pour un éclairage général en mélangeant une part de lumière générée directement (216) et une part de lumière générée indirectement (214) sur une couche fluorescente (220), et transmettre en même temps le premier signal lumineux (S1) en modulant un courant d'excitation de la première LED fluorescente (L1), une plage de longueurs d'onde de la part de lumière générée directement par la première LED fluorescente (L1) constituant la première plage de longueurs d'onde,
dans lequel la deuxième LED d'éclairage général est une deuxième LED fluorescente réalisée pour générer une lumière blanche pour un éclairage général en mélangeant une part de lumière générée directement et une part de lumière générée indirectement sur une couche fluorescente, et transmettre en même temps le deuxième signal en modulant un courant d'excitation la deuxième LED fluorescente, une plage de longueurs d'onde de la part de lumière générée directement par la deuxième LED fluorescente (L2) constituant la deuxième plage de longueurs d'onde, et
dans lequel la troisième LED d'éclairage général est une troisième LED fluorescente (L3) réalisée pour générer de la lumière blanche pour un éclairage général en mélangeant une part de lumière générée directement et une part de lumière générée indirectement sur une couche fluorescente, et transmettre en même temps le troisième signal (S3) en modulant un courant d'excitation de la troisième LED fluorescente, une plage de longueurs d'onde de la part de lumière générée directement par la troisième LED fluorescente (L3) constituant la troisième plage de longueurs d'onde.
